(19) Europäisches Patentamt
European Patent Office
Office européen des brevets

(11) **EP 0 604 023 B1**

(12) **EUROPEAN PATENT SPECIFICATION**

(45) Date of publication and mention
of the grant of the patent:
**13.08.1997 Bulletin 1997/33**

(51) Int. Cl.[6]: **B41M 5/00**, C09D 11/00,
B41M 3/12, B41M 7/00

(21) Application number: **93309424.5**

(22) Date of filing: **25.11.1993**

(54) **Process for applying selective phase change ink compositions to substrates in indirect printing process**

Verfahren zum Aufbringen von selektiver Phaseaustauschtinte zum Substraten durch indirekten Druck

Procédé pour appliquer à des substrats par impression indirectes des compositions d'encres à changement de phase selectif

(84) Designated Contracting States:
**CH DE FR GB IT LI**

(30) Priority: **25.11.1992 US 981677**
**25.11.1992 US 981646**
**19.01.1993 US 5970**

(43) Date of publication of application:
**29.06.1994 Bulletin 1994/26**

(73) Proprietor: **TEKTRONIX, INC.**
**Wilsonville, Oregon 97070-1000 (US)**

(72) Inventors:
• **Titterington, Donald R.**
**Tualatin, Oregon 97062 (US)**
• **Bui, Loc V.**
**Portland, Oregon 97219 (US)**
• **Hirschy, Linda M.**
**Portland, Oregon 97223 (US)**
• **Frame, Harold R.**
**Gaston, Oregon 97119 (US)**

(74) Representative: **Lawrence, Malcolm Graham et al**
**Hepworth, Lawrence, Bryer & Bizley**
**Merlin House**
**Falconry Court**
**Baker's Lane**
**Epping Essex CM16 5DQ (GB)**

(56) References cited:
EP-A- 0 435 675       EP-A- 0 606 490

• PATENT ABSTRACTS OF JAPAN vol. 14, no. 281 (M-0986) 18 June 1990 & JP-A-02 086 453 (FUJI XEROX CO. LTD.) 27 March 1990
• PATENT ABSTRACTS OF JAPAN vol. 17, no. 537 (M-1487) 28 September 1993 & JP-A-05 147 209 (RICOH CO LTD) 15 June 1993

## Description

The present invention generally relates to selective phase change ink compositions and to a process for applying same to substrates, and more particularly to the application and use of such inks in a process in which phase change compositions having selective process capabilities are applied to a substrate in indirect printing processes where intermediate transfer surfaces are employed.

In general, phase change inks are in the solid phase at ambient temperature, but exist in the liquid phase at the elevated operating temperature of an ink jet printing device. At the jet operating temperature, droplets of liquid ink are ejected from the printing device and, when the ink droplets contact the surface of the printing media, they quickly solidify to form a predetermined pattern of solidified ink drops.

The phase change ink comprises a phase change ink carrier composition which is combined with a phase change ink compatible colorant. Preferably, a colored phase change ink will be formed by combining the above-described ink carrier composition with compatible subtractive primary colorants. The subtractive primary colored phase change inks of this invention comprise four component dyes, namely, cyan, magenta, yellow and black. The subtractive primary colorants employed typically comprise dyes from either class of Color Index (C.I.) Solvent Dyes, Disperse Dyes, modified Acid and Direct Dyes, and a limited number of Basic Dyes.

Phase change ink is desirable since it remains in a solid phase at room temperature, during shipping, long-term storage, etc. Also, the problems associated with nozzle clogging due to ink evaporation are largely eliminated, thereby improving the reliability of ink jet printing. Furthermore, in prior art phase change ink jet printers where the ink droplets are applied directly onto the printing medium the droplets solidify immediately upon contact with the substrate, migration of ink along the printing medium is prevented and dot quality is improved. This is also true of the processes and ink compositions described herein.

The initial prior art on the direct application of phase change inks in ink jet printing involved monochrome inks jetted by electrostatic printing devices. Thus, for example, in U.S. 233,653,932, a low melting ink, 30 degrees Centigrade (° C) to 50° C, is provided employing an ink base comprising diesters of sebacic acid. In a similar process, U.S. 3,715,219 describes another low melting point ink (30° C to 60° C) comprising a paraffin alcohol-based ink. However, when low melting point phase change inks are employed in printing onto a substrate, they exhibit offset problems, namely, when the printed substrates formed from these inks are stacked and stored for subsequent use, they can become adhered to one another, particularly if high ambient temperatures are experienced.

U.S. Pat. No. 4,390,369 and U.S. Pat. No. 4,484,948 describe methods for producing monochrome phase change inks which employ a natural wax ink base, such as Japan wax, candelilla wax, carnauba wax, etc., which is printed by direct application from a drop-on-demand ink jet device at a temperature ranging between 65° C and 75° C. In U.S. Pat. No. 4,659,383, a monochrome ink composition is provided having an ink base comprising a C20-24 acid or alcohol, a ketone, and an acrylic resin plasticizer. These monochrome ink compositions are not durable and when printed by direct application can be smudged with routine handling and folding.

In Japanese patent application 128,053/78, amides which are solid at room temperature, such as acetamide, are employed as printing inks. U.S. 4,684,956 is directed to monochrome phase change inks utilizing synthetic microcrystalline wax (hydrocarbon wax) and microcrystalline polyethylene wax. This molten composition can be applied to a variety of porous and non-porous substrates using a drop-on-demand ink jet direct application technique.

EP 0177352 and EP 0206286 reference direct phase change ink jet printing in color. The ink bases for these systems comprise fatty acids, a thermoplastic polyethylene and a phase change material in the first application; and the alcohol portion of a thermal setting resin pair, a mixture of organic solvents (o- and p-toluene sulfonamide) and a dye in the second application.

In U.S. 4,830,671, a hot-melt or phase change color ink composition is provided having the properties of stability and uniformity of performance under ink jet printing conditions. The resinous binder for the above-described phase change ink is the condensation reaction product of one equivalent of polymerized fatty acid, two equivalents of diamine and two equivalents of a monocarboxylic acid.

In PCT publication WO 91/10711, a hot melt ink for direct application by ink jet printing is provided. The colored ink jet images have a relatively narrow melting range and inhibit crystallinity upon quenching to reduce attenuation of transmitted light. Phase change ink compositions for direct application onto an underlying substrate are described in U.S. 4,889,560, U.S. 4,889,761, U.S. 4,992,304, U.S. 5,084,099, all of which are assigned to the assignee of this patent application, and all of which are incorporated herein by reference in pertinent part.

The carrier composition of phase change inks preferably includes a fatty amide-containing compound. It may also include plasticizers and tackifiers. Thin films of substantially uniform thickness of this ink composition are rectilinearly light transmissive, so that the inks are suitable for preparing overhead transparencies when used in the manner described in the patents just referenced above.

All of the above-described prior art relates to direct phase change ink processes in which the ink is jetted in the form of discrete drops directly onto a substrate. In prior art phase change ink systems, such as U.S. 4,889,560, special selective process capabilities are not required because the phase change ink is applied directly to the substrate by the use of an ink jet printing process. However, phase change inks which work in direct processes do not necessarily perform satisfactorily in indirect processes where the inks are first applied to an intermediate transfer surface and then to the final receiving substrate or surface. These problems are solved by the present invention which relates to phase change ink compositions with selective process capabilities.

The phase change ink of the present invention is indirectly applied to the substrate via an intermediate transfer surface. Thus, it is first deposited onto an intermediate transfer surface in a linewise fashion, as will be described hereinafter. The pattern of phase change ink on the intermediate transfer surface is then contact transferred to the substrate.

The indirect application via an intermediate transfer surface of phase change inks by the process of the present invention requires certain mechanical and physical properties which are necessary to produce a printed substrate by applying a phase change ink composition first to an intermediate surface and then to a final receiving surface or substrate. The invention includes combining a phase change compatible colorant with a modified phase change ink carrier composition to unexpectedly produce an ink with specific desired fluidic and mechanical properties which meets the parameters needed for indirect application. It also includes providing a process for the indirect application via an intermediate transfer surface of said phase change ink composition to a final receiving surface or substrate to which the phase change ink composition is fixed to produce a finished printed substrate.

Typically, the phase change ink composition of the present invention is formulated by combining a modified phase change ink carrier composition having selective process capabilities with a phase change compatible colorant composition. The selective phase change ink composition produced thereby, after it is formulated, is typically cast into solid ink sticks and placed into an ink jet printing device. Then, the temperature is raised to a first elevated operating temperature where a liquid phase with selective fluidic properties is formed. The ink is then typically held as a liquid at this relatively high operating temperature in the reservoir and print head of an ink jet printer.

The liquid phase ink composition can then be indirectly applied in a predetermined pattern to a substrate. For example, the ink composition can then be deposited onto an intermediate transfer surface (see European Patent Application N° 93 309426.0; 604025). The ink composition is maintained as a solid, in a predetermined pattern on the intermediate transfer surface. The intermediate transfer surface is held at an intermediate temperature, which is below the melting point of the ink formulation, but is above ambient temperature. At this intermediate temperature, the ink is malleable and has specified mechanical properties which enable it to be used in subsequent steps of the process.

During the next step the ink is transferred in an "imagewise" or "pagewise" fashion to the final substrate by use of a pressure nip where the specified pressure is above the compressive yield strength of the solid, malleable ink at the intermediate temperature mentioned above. Preferably, the final receiving substrate or surface is heated to a temperature greater than the intermediate temperature prior to being fed into the nip where it is brought into contact with the malleable ink droplets that form a desired image or pattern. During this transfer step the ink droplets are flattened, spread, and, in the case of paper substrates, fused into the substrate. The final step in the process is removal of the final substrate from the pressure nip and separation of the substrate and ink layer from the intermediate transfer surface. During this step the ink must retain enough cohesive strength to resist cohesive failure due to the tensile forces it experiences as it is peeled from the transfer surface. Thin films of uniform thickness of the phase change ink composition on the final receiving substrate when cooled to the ambient temperature must be ductile and retain sufficient flexibility so the image will not fracture upon bending, while possessing a high degree of lightness, chroma, transparency and thermal stability.

It has been determined in an indirect application process employing an intermediate transfer surface that a phase change ink composition must have certain fluidic and mechanical properties in order to produce a printed substrate of high quality. These desirable properties of the phase change ink compositions of this invention in the solid state are specified and measured by using several analytical techniques. One such technique is dynamic mechanical analyses (DMA). DMA is a technique capable of measuring the viscoelastic properties of a material and identifying the viscoelastic properties of a material and identifying the material's elastic and viscous components. The measurements are made by subjecting the ink composition to an alternating (oscillatory or dynamic) strain and simultaneously measuring the alternating stresses and phase angles at different frequencies and temperatures. The dynamic stress($\sigma^*$) of an ink composition can be separated into two components. These are the "elastic stress" component which is the magnitude of the portion of the applied force in phase with the applied strain, and the "viscous stress" component, which is the magnitude of the portion of the applied force out of phase with the applied strain. The dynamic modulus ($E^*$) can be determined from the ratio of dynamic stress over strain. Correspondingly, it can be broken down into the in-phase component of the modulus, $E'$, and the out-of-phase component of the modulus, $E''$. $E'$ defines the energy stored in a specimen under an applied strain. $E'$ is determined by the equation $E' = \sigma_o/\varepsilon_o (\mathrm{Cos}\delta)$. $E''$ defines the energy loss due to viscous dissipation under an applied strain. $E''$ is determined by the equation $E'' = \sigma_o/\varepsilon_o (\mathrm{Sin}\delta)$.

The phase angle ($\delta$) is the lag in the measured stresses to an applied strain due to the viscoelastic nature of the material. The loss tangent ($\tan \delta$) is the ratio of loss modulus over storage modulus. Tan $\delta$ is often referred to as the dissipation (damping) factor, i.e., the ratio of energy dissipated per cycle to the maximum potential energy stored during a cycle. Finally, the glass transition temperature ($T_g$) is a temperature at which there is a large drop in modulus, about 0.5 to about 3 orders of magnitude, accompanied by a definite peak of the tan $\delta$. Below the $T_g$, the material behaves like a brittle solid. At the $T_g$, the material acts like a leathery solid and is capable of dissipating energy. Above the $T_g$, the material is similar to a rubbery solid. Dynamic properties are usually plotted in terms of E', E" and tan $\delta$ as a function of temperature at a constant frequency or as a function of frequency at a constant temperature. Through the entitled, "Viscoelastic Properties of Polymers", Chapter 11, pages 264-320, 3rd Edition by John D. Ferry; it is understood that the effect of changing temperature will correspond to a shift along the frequency axis for all relaxation processes, without appreciable change in magnitude of all of these relaxation processes.

Another of the mechanical analytical techniques mentioned above is compressive yield testing on bulk samples of the phase change ink compositions. Yield stress is the point on the stress-strain curve at which the material continues to deform without an increase in stress. This is important in the printing process mentioned above since it determines the pressure needed to spread the solid, malleable ink droplets into a continuous thin film during the transfer process.

There are various types of deformation the ink undergoes in compression as a function of temperature or rate. An ink can be classified as being brittle if it fails by the shearing and fracturing of the molecular bonds. This is typified by low elongation (which is directly proportional to strain) and moderate to high stress. Since the integration of the area under the stress-strain curve is a measure of the toughness of the material, a brittle material is strong, but not tough. The brittle behavior is detrimental to the durability of the ink on substrates because it is both low in elongation (i.e. not very ductile or flexible) and toughness (i.e. the ability to dissipate energy).

An ink is considered to be ductile if it fails by sliding the molecules over each other and flowing. This is typified by high elongation and toughness. Ductile behavior is desirable for a printing process involving transfer and fusing or fixing because it allows the ink to spread by flowing under an applied pressure without fracturing.

Shear banding is the transition between the ductile and weak behavior, where the ink loses its cohesive strength. Shear bands are typified by 45° angle criss-crossed bands that indicate the ink is weakening. Weak behavior is characterized by the crumbling behavior of the ink. This is due to the loss in cohesive strength of the material. It is theorized that this occurs once short molecules have flowed past one another at high elongation. The weak behavior is to be avoided during the image transfer and fusing steps because it leads to poor durability of the ink on substrates, poor rectilinear light transmission of the ink, and poor transfer efficiency during printing.

The phase change ink compositions as finally applied to the substrate make a finish print exhibiting excellent color properties. Thin films of uniform thickness of the phase change ink composition are rectilinearly light transmissive and exhibit exemplary C*ab and L* values as hereinafter described.

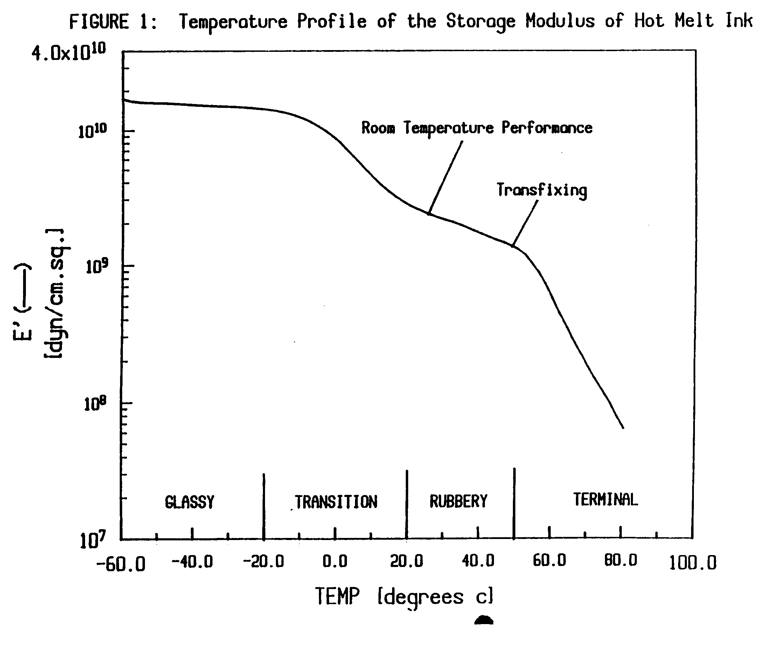

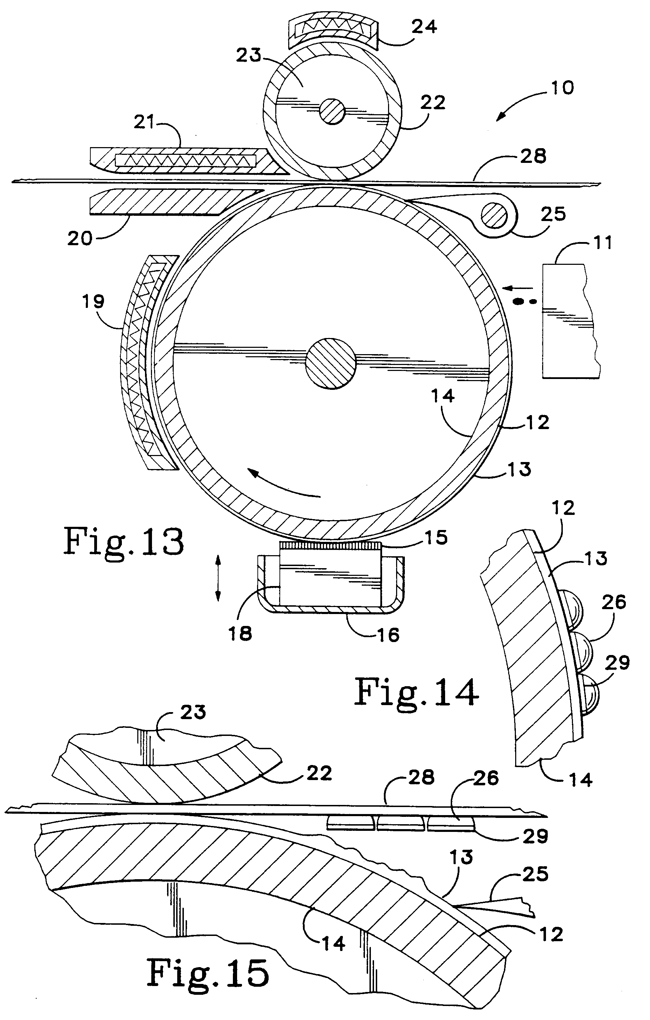

The invention will now be described by way of example only, with reference to a preferred embodiment thereof, reference being made for that purpose to the accompanying drawings. In the drawings, Figures 1 to 12 are as described below; Figures 13 to 15 show apparatus for use in performing the process of the invention, such apparatus being described as to structure and operation in copending European Patent Application No 93 309426.0 (604025) and also below with reference to Figures 13 to 15.

Fig. 1 is a generalized illustration of the storage modulus, E', as a function of temperature at about 1 Hz for an appropriate phase change ink composition of the present invention.

Fig. 2 is a generalized temperature profile of tan $\delta$ for a phase change ink composition of the present invention.

Fig. 3 is a DMA curve for the formulation of Example 1.

FIGS. 4-8 are DMA curves for the formulations of Example 2.

FIGS. 9, 10 and 12 are plots of compressive yield stress versus temperature for the formulations of Examples 1 and 3.

FIG. 11 is a plot of the compressive yield stress versus strain rate for the formulation B of Example 2.

This invention comprises selective phase change ink compositions for use in a process by which such compositions are indirectly applied via an intermediate transfer surface to a final receiving surface or substrate. The selective phase change ink compositions of the instant invention comprise a phase change ink colorant composition and a modified phase change ink carrier composition. The modified phase change ink carrier composition is formulated so that it produces a selective ink composition having predetermined fluidic and mechanical properties which meet the parameters required for the indirect application via an intermediate transfer surface of the ink composition to a final receiving substrate.

The modified base phase change ink carrier composition typically comprises a fatty amide-containing material. The fatty amide-containing material of the modified phase change ink carrier is a tetra-amide compound. The preferred tetra-amide compounds for producing the modified phase change ink carrier composition are dimer acid-based tetra-amides which preferably include the reaction product of a fatty acid, a diamine (ethylene diamine) and a dimer acid. For purposes of this invention, the term "dimer acid" preferably means a hydrogenated oleic acid dimer product. A preferred example of such a dimer acid is a product known as Empol 1008 Dimer Acid, manufactured by the Emery Division of Henkel Corporation of Cincinnati, Ohio. Fatty acids having from 10 to 22 carbon atoms are preferably employed in the formation of the dimer acid-based tetra-amide. These dimer acid-based tetra-amides are produced by Union Camp and comprise the reaction product of ethylene diamine, dimer acid, and the following fatty acids: decanoic acid (Union Camp X3203-23), myristic acid (Union Camp X3202-56), stearic Acid (Union Camp X3138-43, X3164-23, X3202-44, X3202-46, X3222-655, X3261-37, X3261-53, and X3290-72), and docosanoic acid (Union Camp X3202-36). For the purposes of this invention, the most preferred dimer acid based tetra-amide is the reaction product of dimer acid, ethylene diamine and stearic acid in the stoichiometric ratio of 1:2:2. Stearic acid is the preferred fatty acid reactant because its adduct with dimer acid and ethylene diamine has the lowest viscosity of the dimer acid based tetra-amides. Its ingredients also are the most readily available and, therefore, lowest in cost.

The fatty amide-containing material can also comprise a mono-amide. In fact, in the preferred case, the phase change ink carrier composition comprises both a tetra-amide compound and a mono-amide compound. The mono-amide compound typically comprises either a primary or secondary mono-amide, but is preferably a secondary mono-amide. Of the primary mono-amides, stearamide, such as Kemamide S, manufactured by Witco Chemical Company, can be employed herein. As for the secondary mono-amides, behenyl benenamide (Kemamide EX-666), and stearyl stearamide (Kemamide S-230 and Kemamide EX-672), all manufactured by Witco Chemical Company, are extremely useful mono-amides. However, stearyl stearamide is the mono-amide of choice in producing the modified phase change ink carrier composition of the present invention.

The preferred fatty amide-containing compounds of this invention comprise a plurality of fatty amide materials which are compatible with each other. Typically, even when a plurality of fatty amide-containing compounds are employed to produce the modified phase change ink carrier composition, the modified carrier composition has a substantially single melting point transition. The melting point of the phase change ink carrier composition is preferably at least about 85° C.

The preferred modified phase change ink carrier composition comprises a tetra-amide and a mono-amide. The weight ratio of the tetra-amide to the mono-amide in the preferred instance is from about 2:1 to about 1:10, and more preferably, from about 1:1 to about 1:3.

Various modifying agents can be added to a phase change ink carrier composition. However, only certain of these modifying agents which are employed in a manner which will produce a phase change ink composition having the properties which meet the parameters required for indirect application to the substrate fall within the scope of this invention. For example, a preferred modifying agent includes certain tackifiers. The preferred tackifiers encompass those which are compatible with fatty amide-containing materials. These include, for example, KE-311 Resin, a glycerol ester of hydrogenated abietic (rosin) acid made by Arakawa Chemical Industries, Ltd., Foral 85, a glycerol ester of hydrogenated abietic (rosin) acid, Foral 105, a pentaerythritol ester of hydroabietic (rosin) acid, Cellolyn 21, a hydroabietic(rosin) alcohol ester of phthalic acid, all manufactured by Hercules Chemical Company, Nevtac 2300 and Nevtac 80, synthetic polyterpene resins manufactured by Neville Chemical Company, and Wingtack 86, a modified synthetic polyterpene resin manufactured by Goodyear Chemical Company. The most preferred tackifier, however, is KE-311.

Another of the preferred modifying agents which can be added to the formulation are certain plasticizers. For instance, many of the phthalate ester plasticizers sold by Monsanto under the traded name "Santicizer" are suitable for this purpose. However, the preferred plasticizer is Santicizer 278, which is the mixed di-ester of phthalic acid with benzyl alcohol and "Texanol".

Other additives may be combined with the phase change ink carrier composition. In a typical phase change ink chemical composition antioxidants are added for preventing discoloration of the carrier composition. The preferred antioxidant materials can include Irganox 1010 manufactured by Ciba Geigy; and Naugard 76, Naugard 512, and Naugard 524 manufactured by Uniroyal Chemical Company. However, the most preferred antioxidant is Naugard 524.

While the modifying agents mentioned above are used for the preferred embodiments of this invention, other materials with similar properties can be combined with or used to produce different phase change ink compositions with mechanical and fluidic properties similar to those outlined above. These other materials can include paraffins, microcrystalline waxes, polyethylene waxes, ester waxes, oligomers or low molecular weight polymers and copolymers such as EVA, ethylene/acrylic acid copolymers, EVA/acrylic acid copolymers, ionomers, copolymers of acrylic acid with polyamides, and the like.

In a preferred case, the phase change ink carrier composition comprises a tetra-amide and a mono-amide compound and a modifying agent which includes a tackifier, a plasticizer, and an antioxidant. The preferred compositional ranges of this phase change ink carrier composition are as follows: from about 10 to about 50 weight percent of a tetra-amide compound, from about 30 to about 80 weight percent of a mono-amide compound, from about O to about 40 weight percent of a tackifier, from about O to about 30 weight percent of a plasticizer and about O to about 2 percent of an antioxidant.

Another important property of phase change inks is viscosity. The viscosity of the molten ink must be matched to the requirements of the ink jet device and optimized versus other physical properties of the ink. For purposes of this invention, the viscosity of the phase change ink is measured on a Ferranti-Shirley cone plate viscometer with a large cone. It is preferred that the viscosity of the phase change ink carrier composition at 140° C, and in turn the ink composition of this invention, is from about $5 \times 10^{-3}$ Pa.s to about $3 \times 10^{-2}$ Pa.s (about 5 to about 30 centipoise), more preferably from about $1 \times 10^{-2}$ Pa.s to about $2 \times 10^{-2}$ Pa.s (about 10 to about 20 centipoise), and most preferably from about $1.1 \times 10^{-2}$ to about $1.5 \times 10^{-2}$ Pa.s (about 11 to about 15 centipoise).

As previously indicated, the subject phase change ink formed from the phase change ink carrier composition exhibit excellent physical properties. For example, the subject phase change ink, unlike prior art phase change inks, exhibits a high level of lightness, chroma, and rectilinear light transmissivity when utilized in a thin film of substantially uniform thickness, so that color images can be conveyed using overhead projection techniques. Furthermore, the preferred phase change ink compositions exhibit the preferred mechanical and fluidic properties mentioned above when measured by DMA, compressive yield testing and viscometry, and more importantly, work well when used in the indirect printing process described in the previously mentioned co-pending European Patent Application No 93 309426.0.

The transmission spectra for each of the phase change inks used in the process of this invention were evaluated on a commercially available spectrophotometer, the ACS Spectro-Sensor II, in accordance with the measuring methods stipulated in ASTM IE805 (Standard Practice of Instrumental Methods of Color or Color Difference Measurements of Materials) using the appropriate calibration standards supplied by the instrument manufacturer. For purposes of verifying and quantifying the overall colorimetric performance of the inks used in the process and as a part of this invention, measurement data were reduced, via tristimulus integration, following ASTM E308 (Standard Method for Computing the Colors of Objects using the CIE System) in order to calculate the 1976 CIE L* (Lightness), a* (redness-greenness), and b* (yellowness-blueness) CIELAB values for each phase change ink sample. In addition, the values for CIELAB Psychometric Chroma, $C^*_{ab}$, and CIELAB Psychometric Hue Angle, were calculated according to publication CIE15.2, Colorimetry (Second Edition, Central Bureau de la CIE, Vienna, 1986).

Unlike conventional phase change ink carriers, the nature of the phase change ink used in the process of the present invention is such that thin films of substantially uniform thickness exhibit a relatively high L* value. For example, a substantially uniform thin film of about $2 \times 10^{-5}$m (about 20 micron) thickness of the phase change ink of this invention preferably has an L* value of at least about 65, more preferably at least about 75, and most preferably at least about 85.

The phase change inks used herein have a relatively high C*ab value when measured as a thin film of substantially uniform thickness. Previously, conventional phase change inks have had a very low degree of rectilinear light transmissivity, even in thin films of substantially uniform thickness. The phase change ink composition used in the process of this invention has C*ab values, when applied as a substantially uniform thin film of about $1 \times 10^{-5}$m (about 10 micron) thickness with subtractive primary yellow, magenta and cyan color phase change ink compositions, that preferably are at least about 40 for said yellow ink composition, at least about 65 for said magenta ink composition, and at least about 30 for the cyan ink composition.

It is also important that the black color phase change ink component be at a minimum light transmissivity level so that the color intensity of the ink is maximized. Accordingly, the L* value of a substantially uniformly thin film of about $1 \times 10^{-5}$m (about 10 microns) thickness of a black color phase change ink is preferably not more than about 35, more preferably not more than about 30, and most preferably not more than about 25.

The respective phase change ink and ink carrier compositions, when transferred to the final substrate in a thin film, are quite durable. One indication of durability is abrasion resistance. For purposes of this invention, abrasion resistance is determined by testing a finished print sample of the phase change ink produced from the carrier composition in a Teledyne Taber Abrader, Model 5130, utilizing CS-230 Abrasion wheels loaded with 500 gram weights. The abrasion wheels are resurfaced after each sample with an S-11 resurfacing disk. Samples printed on paper were tested according to ASTM D406(F84 (Standard Test Method For Abrasion Resistance of Organic Coatings by the Taber Abrader). Samples printed on light transmissive thin films were tested using ASTM D1304Q-85 (Standard Test Method For Resistance of Transparent Plastics to Surface Abrasion). Print samples were tested as described above, and the results of those tests demonstrated excellent abrasion resistance.

A further test employed to evaluate the durability of phase change inks and ink carrier compositions is an offset transfer or blocking test. This determines whether the phase change ink printed on a substrate will adhere to an adjacent substrate at ambient or elevated temperatures when the printed products are stacked one on top of the other. The blocking test is conducted using an indirect transfer method by printing samples of the phase change ink produced from the carrier composition onto a paper or thin film substrate and placing that substrate in a manila folder under a one pound piece of aluminum, about 0.216m (about 8.5 inches) wide and about 0.279m (about 11 inches) long to evenly distribute the weight of a 4.536 kg (10 pound) block. These printed samples are placed in an oven for 24 hours at a constant temperature of about 60° C. Print samples of the phase change ink of the present invention, subjected to the above described blocking test showed no blocking.

The above-defined DMA properties of the phase change ink compositions were experimentally determined. These dynamic measurements were done on the Rheometrics Solids Analyzer (RSA II) manufactured by Rheometrics, Inc. of Piscataway, New Jersey, using a dual cantilever beam geometry. The dimensions of the sample were about $2.0 \pm 1.0$ mm thick, about $6.5 \pm 0.5$ mm wide, about $54.0 \pm 1.0$ mm long. A time/cure sweep was carried out under a desired force oscillation or testing frequency of about 1 Hz and an auto-strain range of about $1.0 \times 10^{-5}$% to about 1%. The temperature range examined was about -60° to about 90° C. The preferred phase change ink compositions typically are (a) ductile or flexible at a temperature of about -10 to about 80° C, (b) have a temperature range for the glassy region from about -100 to 40° C, the value of E' being from about $1.5 \times 10^{8}$ to $1.5 \times 10^{10}$ Pa (about $1.5 \times 10^{9}$ to $1.5 \times 10^{11}$ dynes/cm$^2$), (c) have a temperature range for the transition region from about -50 to about 60° C, (d) have a temperature range for the rubbery region of E' from about -10 to 100° C, the value of E' being from about $1.0 \times 10^{5}$ to about $1.0 \times 10^{10}$ Pa (about $1.0 \times 10^{6}$ to $1.0 \times 10^{11}$ dynes/cm$^2$), and (e) have a temperature range for the terminal region of E' from about 30 to about 160° C. Furthermore, the glass transition temperature range of the phase change ink compositions are from about -40 to about 40° C, the temperature range for integrating under the tan $\delta$ peak of the phase change ink composition is from about -80 to about 80° C with integration values ranging from about 5 to about 40, and the temperature range for the peak value of tan $\delta$ of the phase change ink is from about -40 to about 40° C with a tan $\delta$ of about $1.0 \times 10^{-2}$ to about $1.0 \times 10$ at peak.

FIG 1 shows a representative plot of the storage modulus, E', as a function of temperature at about 1 Hz for an appropriate phase change ink composition for use in the printing process of the present invention. The curve will be divided up into four distinct regions: glassy, transition, rubbery, and terminal.

In the glassy region the ink behaves similar to a hard, brittle solid i.e., E' is high, about $1 \times 10^9$ Pa (about $1 \times 10^{10}$ dynes/cm$^2$). This is because in this region there is not enough thermal energy or a long enough time for the molecules to move. This region needs to be well-below room temperature so the ink will not be brittle and affect the room temperature performance on paper.

The transition region is characterized by a large drop in the storage modulus of about one order of magnitude. This is because the molecules have enough thermal energy or time to undergo conformational changes. In this region, the ink changes from being hard and brittle to being tough and leathery.

The rubbery region describes a slightly decreasing plateau. In this region, there is a short term elastic response to the deformation that gives the ink its flexibility. It is theorized that the impedance to motion or flow in this region is due to entanglements of molecules or physical cross-links from crystalline domains. Fine tuning of the ink to get this plateau in the appropriate temperature range for good transfer and fixing and room temperature performance is of great importance in formulating these phase change ink compositions. The rubbery region encompasses the ink in both its malleable state during the transfer and fixing or fusing step and its final ductile state on the final receiving substrate.

Finally, in the terminal region, there is another drop in the modulus. It is believed in this region that the molecules have sufficient energy or time to flow and overcome the entanglements.

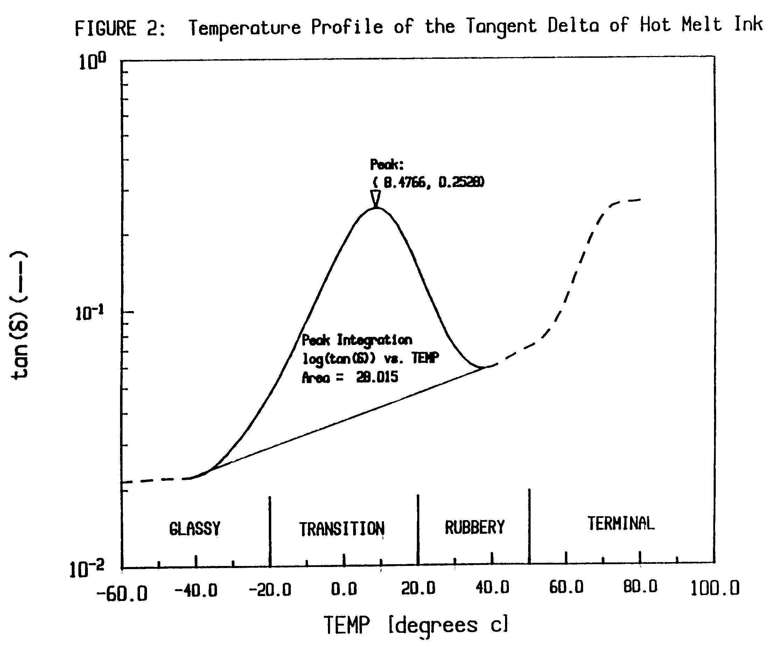

FIG 2 gives the general temperature profile of tan $\delta$ for a phase change ink composition for use in the printing process of the present invention. In the glassy region, tan $\delta$ is small. The peak of the damping curve occurs in the transition region and indicates the $T_g$ of the material. The area under the tan $\delta$ curve gives an indication of the relative toughness of the ink, which is a measure of the energy dissipated during deformation. Since tan $\delta$ is equal to the loss modulus divided by the storage modulus, it is not necessary to specify the profiles of both the tan $\delta$ and loss modulus.

The phase change ink compositions were also analyzed by compressive yield testing. The compressive yield strength measurements were done on an MTS SINTECH 2/D mechanical tester manufactured by MTS Sintech, Inc. of Cary, North Carolina, using small cylindrical sample blocks. The dimensions of a typical sample are about $19.0 \pm 1.0$ mm X about $19.0 \pm 1.0$ mm. Isothermal yield stress was measured as a function of temperature (about 25° to about 80° C) and strain rate. The material was deformed up to about 40%.

The preferred yield stresses as a function of temperature for suitable phase change ink compositions for use in the indirect printing process of the present invention are described by an equation as follows:

$$YS = mT + I$$

wherein YS, which is a function of temperature, is the yield stress, m is the slope, T is the temperature, and I is the intercept.

Under non-process conditions, i.e., after the final printed product is formed or conditions under which the ink sticks are stored, and the ink is in a ductile state or condition at a temperature range of from at least about 10° to about 60° C, the preferred yield stress values are described by m as being from about $-62.053 \pm -13.790$ kPa (about $-9 \pm -2$ psi)/° C to about $-248.211 \pm -13.790$ kPa (about $-36 \pm -2$ psi)/° C and I as being from about 5.516 MPa $\pm$ 689.48 kPa (about $800 \pm 100$ psi) to about 15.168 MPa $\pm$ 689.48 kPa (about $2200 \pm 100$ psi). More preferably, m is about $-206.843 \pm -13.790$ kPa (about $-30 \pm -2$ psi)/° C and I is about 11.645 MPa $\pm$ 689.48 kPa (about $1700 \pm 100$ psi). Under process conditions, i.e., during the indirect printing of the ink from an intermediate transfer surface onto a substrate while the ink is in a malleable solid condition or state, at a temperature of from at least about 30° C to about 80° C, the preferred stress values are described by m as being from about $-41.368 \pm -13.790$ kPa (about $-6 \pm -2$ psi)/° C to about $-248.211 \pm -13.790$ kPa (about $-36 \pm -2$ psi)/° C and I as being from about 5.516 MPa $\pm -689.48$ kPa (about $800 \pm 100$ psi) to about 1.103 MPa $\pm$ 689.48 kPa (about $1600 \pm 100$ psi). More preferably, m is about $-62.053 \pm -13.790$ kPa (about $-9 \pm -2$ psi)/° C and I is about 6.550 MPa $\pm$ 689.48 kPa (about $950 \pm 100$ psi).

The ink utilized in the process and system of the instant invention is preferably initially in solid form and is then changed to a molten state by the application of heat energy to raise the temperature from about 85° C to about 150° C. Elevated temperatures above this range will cause degradation or chemical breakdown of the ink. The molten ink is then applied in raster fashion from the ink jets in the printhead to the exposed surface of the liquid layer forming the intermediate transfer surface, where it is cooled to an intermediate temperature and solidifies to a malleable state in which it is transferred to the final receiving surface via a contact transfer by entering the nip between the pressure and fusing roller and the liquid layer forming the intermediate transfer surface on the support surface or drum. This intermediate temperature where the solidified ink is maintained in its malleable state is between about 30° C to about 80° C.

Once the solid malleable ink image enters the nip, it is deformed to its final image conformation and adheres or is fixed to the final receiving substrate either by the pressure exerted against ink image on the final receiving substrate by the pressure and fusing roller alone, or by the combination of the pressure and heat supplied by appropriate heating apparatus. Additional heating apparatus could optionally be employed to supply heat to facilitate the process at this point. The pressure exerted on the ink image is between about 68.948 to about 13789.514 kPa (about 10 to about 2000 psi) more preferably between about 3.447 to about 6.895 MPa (about 500 to about 1000 psi), and most preferably between about 5.171 to about 5.861 MPa (about 750 to about 850 psi). The pressure must be sufficient to have the ink image adhere to the final receiving substrate and be sufficiently deformed to ensure that light is transmitted through the ink image rectilinearly or without significant deviation in its path from the inlet to the outlet, in those instances when the final receiving substrate is a transparency. Once adhered to the final receiving substrate, the ink image is cooled to ambient temperature of about 20° to about 25° C. The ink comprising the ink image must be ductile, or be able to yield or experience plastic deformation without fracture when kept above the glass transition temperature. Below the glass transition temperature the ink is brittle. The temperature of the ink image in the ductile state is between about -10° C and to about the melting point, or less than about 85° C.

The following examples 1 to 7 are intended to illustrate the invention by way of example only, and to be illustrative of the phase change ink formulations that can be successfully employed both with and without a liquid intermediate transfer surface.

## EXAMPLE 1

This example demonstrates that even though a phase change ink composition can be effectively applied to an underlying substrate by direct ink jet printing techniques, such as described in Example 1 of U.S. 4,889,560, that same phase change ink composition may not be effectively applied by the indirect ink jet printing techniques of the present invention.

Solid phase change ink ingots of the subtractive primary colors were produced as follows: The phase change ink carrier composition was prepared from 58 grams of Kemamide S-180, 32 grams of Unirez X37-51-15 (a dimer acid-based tetraamide material manufactured by Union Camp and formed by the reaction of one mole of dimer acid, two moles of ethylene diamine, and two moles of stearic acid), and 10 grams of KE-311 Resin which were added to a 500 ml. beaker and heated with stirring to a temperature of about 120° C. After a homogeneous solution of the materials was achieved, the molten phase change ink carrier composition was filtered through a heated Mott apparatus using Whatman #3 filter paper and a pressure of 15 psi. The molten phase change ink carrier was placed in a beaker at about 105° C. 1% by weight of Orasol Yellow 46N colorant from Ciba Geigy was added to the mixture, which was then stirred at about 105° C for about 1 hour. The resulting ink composition was filtered using Whatman #3 filter paper in the heated Mott apparatus at about 110° C. The filtrate was poured into molds and allowed to solidify to form solid ink sticks.

The above procedure was repeated, substituting the other primary colorants required for ink jet color printing as follows: about 0.63% by weight Neolane Red T-X8 400 FA by Ciba Geigy and about 0.24% by weight Primene 81R by Rohm & Haas to produce magenta solid ink sticks; about 1.1% by weight Savinyl Blue 6LS by Sandoz and about 1.6% by weight Savinyl Black & RLS to produce cyan solid ink sticks.

The inks are placed in a phase change color printer and applied from an ink jet printhead heated to about 140° C to a liquid intermediate transfer surface supported by about a 0.105m (about a 4.13 inch) diameter support drum. The raster printed image is contact transferred in a pagewise fashion to a sheet of Hammermill Laser Print high resolution electronic publishing grade paper by pressure in a nip formed between a fusing roller and the support drum while being maintained at a temperature of about 50° C. The image is not fully transferred and is weak and crumbly. The image cracks upon folding of the paper at room temperature.

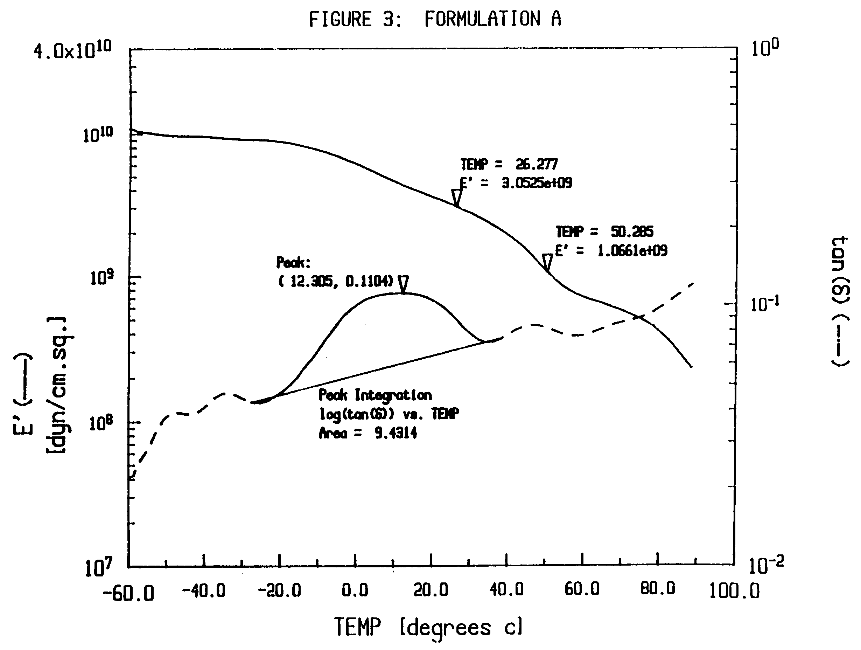

It is clear that the DMA curve shown in Fig. 3 for the phase change ink composition described above does not have a distinct rubbery plateau associated with an amorphous material. This indicates that this phase change ink composition has a high percent crystallinity and requires more stress to yield the ink during the transfer and fusing process. The area under the tan $\delta$ peak, i.e., 9.4, is small, indicating that the ink is not very tough.

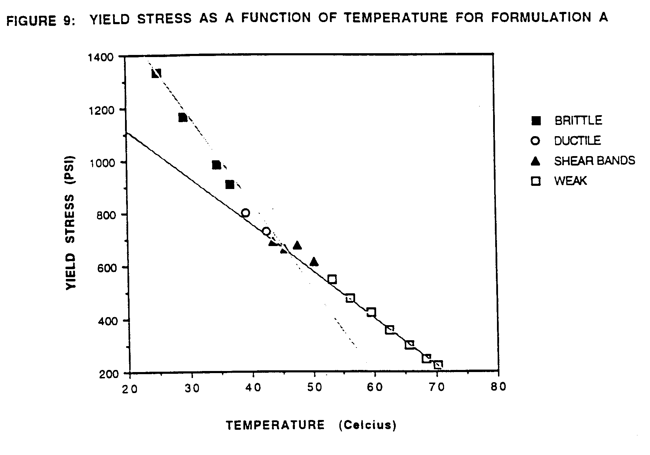

FIG. 9 is a plot of the yield stress as a function of temperature at a constant strain rate of approximately 0.7 sec$^{-1}$ for Formulation A. From room temperature up to about 35° C, the ink composition is brittle in compression. This indicates that it would not be very flexible or ductile and would tend to crack upon folding of the final receiving substrate. From about 35° C to about 40° C, the composition is ductile. This is too narrow of a range for efficient use in the indirect printing process. In the about 40° to about 50° C. range, the ink starts to show signs of shear banding. The mechanical properties of the ink start to deteriorate beyond about 50° C., which is characterized by a weak, crumbly behavior of the ink. This is highly undesirable in the indirect printing process using an intermediate transfer surface since the ink, once fused under these conditions, does not have the cohesive strength for efficient transfer. The yield stresses for this formulation are extremely high. This is undesirable because relatively high pressure is needed to fuse the ink during transfer.

EXAMPLE 2

This example demonstrates a formulation identified as Formulation B, which meets the flexibility and toughness standards not achieved by the phase change ink composition of Example 1 of U.S. 4,889,560. The formulation illustrates a hot melt ink that is flexible at room temperature and can be transferred and fixed to a final receiving substrate up to about 50° C. The ink was formulated according to the procedure followed in Example I, using the following ingredients:

| Ingredients | Weight % |
|---|---|
| Kemamide S-180 | 41.5 |
| Tetra-amide | 21.5 |
| KE-311 | 27.5 |
| Santicizer-278 | 9.5 |

The dyes were added to the ink carrier composition of this Example following the procedure in Example 1 in the following amounts:

about 2.00% by weight Orosol Yellow 46N
about 1.26% by weight Neolane Red E-XB 400FA
about 0.48% by weight Primene 81R
about 2.20% by weight Savinyl Blue GLS
about 3.2% by weight Savinyl Black RLS

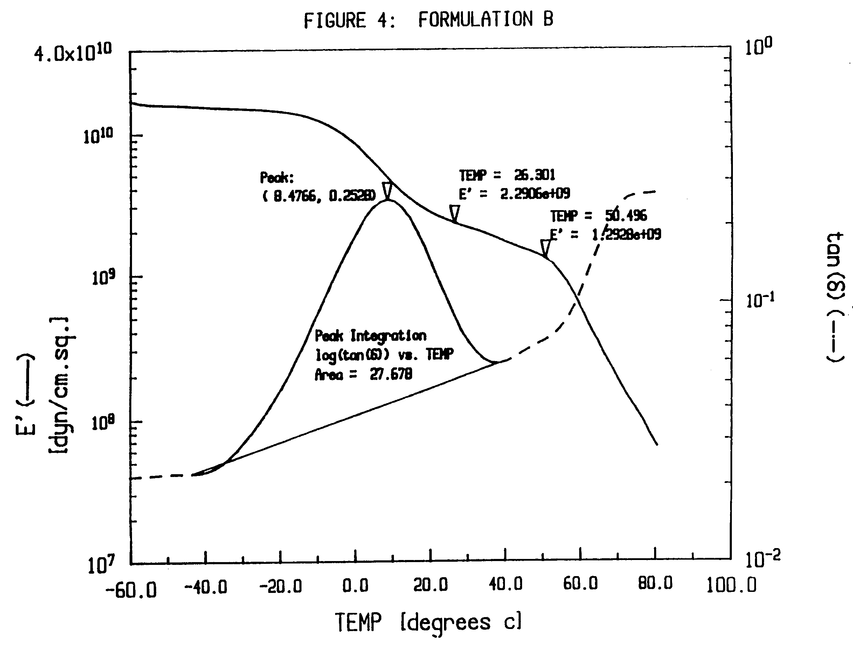

The DMA curve for Formulation B is given in Figure 4. The $T_g$ of the ink is about 8.5° C, so it should be flexible at room temperature. There is a distinct drop in E' of about one order in magnitude at the $T_g$. This indicated that the ink is not highly crystalline. The modulus is lower than that of Formulation A in Example 1, indicating that less energy is needed to yield and spread the ink during the transfer and fixing steps, as is evidenced by the compression testing results given below. There is a short rubbery plateau from room temperature to about 50° C. At temperatures higher than about 50° C, there is a distinct reduction in modulus, indicating a loss in mechanical strength so transfer and fixing is not feasible beyond this temperature. The area under the tan δ peak is 27.7, which is about three times higher than Formula A in Example 1 and indicates that the ink will be much tougher.

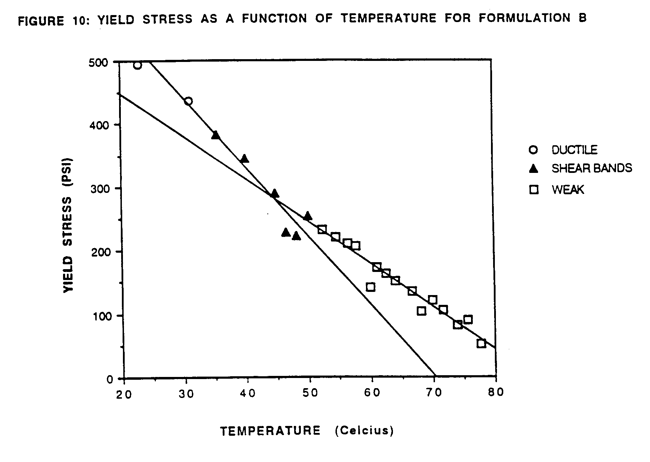

Figure 10 is a plot of the yield stress as a function of temperature at a constant strain rate of approximately 0.7 sec⁻I for Formulation B. From room temperature up to about 35° C, Formulation B is ductile. This indicates that this composition is flexible at room temperature, and when printed on paper and transparency substrates it does not crack upon their being folded. The shear bandings occur in the range of about 35° to about 50° C and the ink becomes weak and crumbly beyond about 50° C. The yield stress for this formulation is lower than Formulation A, which is desirable for the indirect printing process.

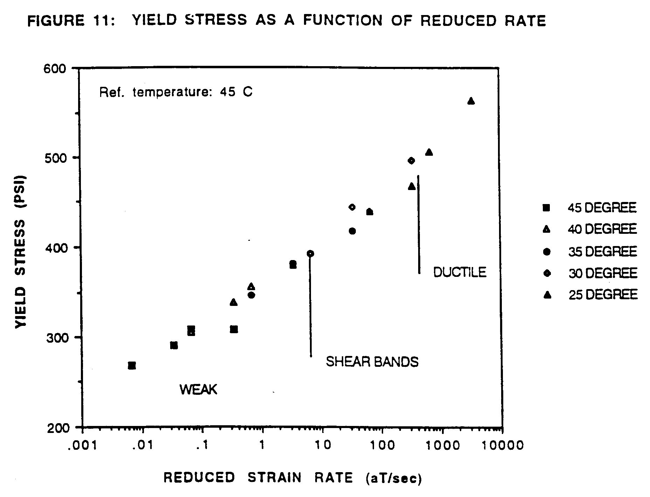

Figure 11 is a plot of yield stress as a function of reduced strain rate for the referenced temperature of about 45° C for Formulation B. At low strain rate, below 10 sec⁻I, the composition is weak and crumbly. As the strain rate increases, the ink molecules have less chance to flow past each other and are able to retain cohesive strength. The reduced data indicates that for every decade in rate there is a gain of at least about 5° C for each transition. Since these compressive yield tests were carried out at least 2 orders of magnitude lower in rate than the rate used during the indirect printing process with a liquid intermediate transfer surface, the ink is in the safe ductile-shear banding zone instead of the shear banding-weak zone during the transfer and fixing process of the indirect printing process.

The inks were placed in a phase change color printer, heated to about 140° C, and applied from an ink jet printhead to a liquid intermediate transfer surface supported by about a 0.105m (about a 4.13 inch) diameter support drum. The raster printed image was contact transferred in a pagewise fashion to a sheet of Xerox 4024 plain paper by pressure in a nip formed between a fusing roller and the support drum while being maintained at a temperature of about 50° C. The image was fully transferred and was well fused into a uniform layer with no indication of cohesive failure upon microscopic inspection. The image revealed no evidence of cracking upon folding of the paper at room temperature.

EXAMPLE 3

Formulation F represents the formulation that has the best blocking characteristics of the inks tested and which is flexible at room temperature under normal slow folding rates, is ductile and retains its cohesive strength under high transfer and fixing temperatures and rates, possesses low yield stress at the transfer and fixing range of between about 40° and about 70° C, and has high yield stresses at room temperatures for good durability.

The ink was formulated according to the procedure followed in Example 1, using the following ingredients:

| Ingredients | Weight % |
|---|---|
| Kemamide S-180 | 47.0 |
| Tetra-amide | 21.5 |
| KE-311 | 27.0 |
| Santicizer-278 | 4.5 |

The dyes were added to the ink carrier composition in the same quantity as given in Example 2 following the procedure of Example 1.

The resulting inks were placed in a phase change color printer and run according to the description in Example 2.

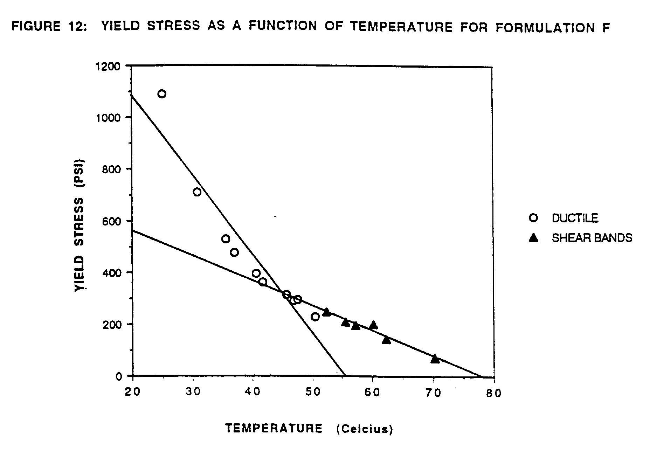

Figure 12 is a plot of yield stress as a function of temperature for Formulation F. The composition is ductile from at least about 25° C to about 55° C. The yield stresses in this range approach the high values of Formulation A. Hence, the composition should have far better blocking properties and durability than Formulation B. From about 55° C. to about 70° C., the ink starts to form shear bands, but still retains cohesive strength. The yield stresses in this range are approximately the same as Formulation B. Therefore, high pressure is not needed to fuse this ink during the indirect printing process using an intermediate transfer surface.

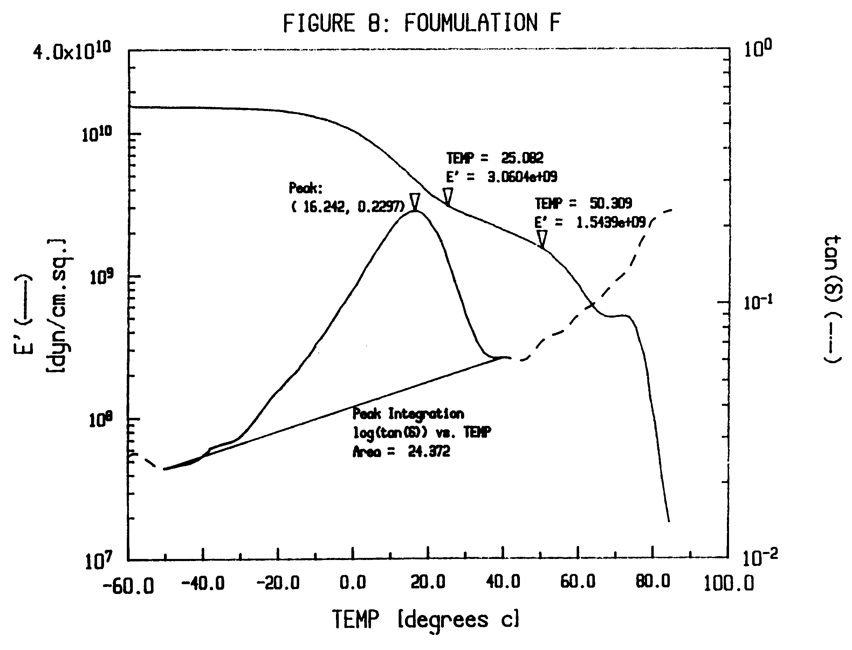

The DMA curve for Formulation F is given in Figure 8. The $T_g$ of the ink is about 16° C, so it is still flexible or ductile at room temperature. There is a distinct drop in E' of about one order in magnitude at the $T_g$. This indicates that the ink is not highly crystalline. The modulus is lower than that of Formula A, indicating that less energy is needed to yield and spread the ink during the transfer and fixing process. There is a short rubbery plateau from room temperature to about 55° C. At temperatures higher than about 55° C, the reduction in modulus is not as abrupt as that for Formulation B in Example 2, indicating there is still some mechanical strength up to about 70° C. The area under the tan $\delta$ peak is about 24, which is only slightly lower than Formula B, and will result in an ink with similar toughness.

EXAMPLE 4

Formulation C illustrates a hot melt ink with the rubbery plateau extended to about 70° C and still retains most of the same properties as Formulation B in Example 2. The ink was formulated according to the ingredients for the dyes in Example 2 and according to the procedure followed in Example 1, using the following ingredients:

| Ingredients | Weight % |
|---|---|
| Kemamide S-180 | 50 |
| Tetra-amide | 30 |
| Cellolyn-21 | 20 |

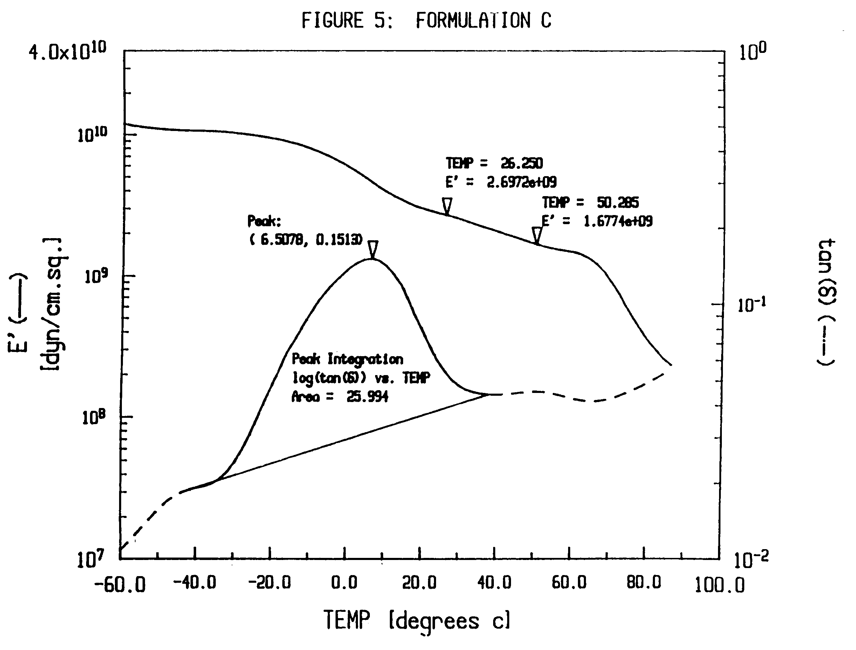

The DMA curve for Formulation C is given in Figure 5. The DMA data show that the $T_g$ is slightly lower than that for Formulation B, the modulus is slightly higher than Formulation B in Example 2, the rubbery plateau has been extended to about 70° C, and the area under the tan $\delta$ is slightly lower. The room temperature performance of the ink should be similar to Formulation A of Example 1. The temperature limit for cohesive failure of the ink is slightly lower than that for Formulation B in Example 2.

The four colors (cyan, magenta, yellow and black) of the ink were placed in a phase change color printer and run according to the description in Example 2, except that the transfer and fixing temperature range was about 2° C to about 5° C higher. The quality of the printed image was comparable to that of Formulation B in Example 2.

EXAMPLE 5

Formulation D illustrates a hot melt ink with a higher $T_g$, but still has the same extension of the rubbery plateau as Formulation C in Example 4. The ink carrier composition was formulated according to the procedure followed in Example 1, using the following ingredients:

| Ingredients | Weight % |
|---|---|
| Kemamide S-180 | 49.0 |
| Tetra-amide | 21.5 |
| KE-311 | 27.0 |
| Santicizer-278 | 2.5 |

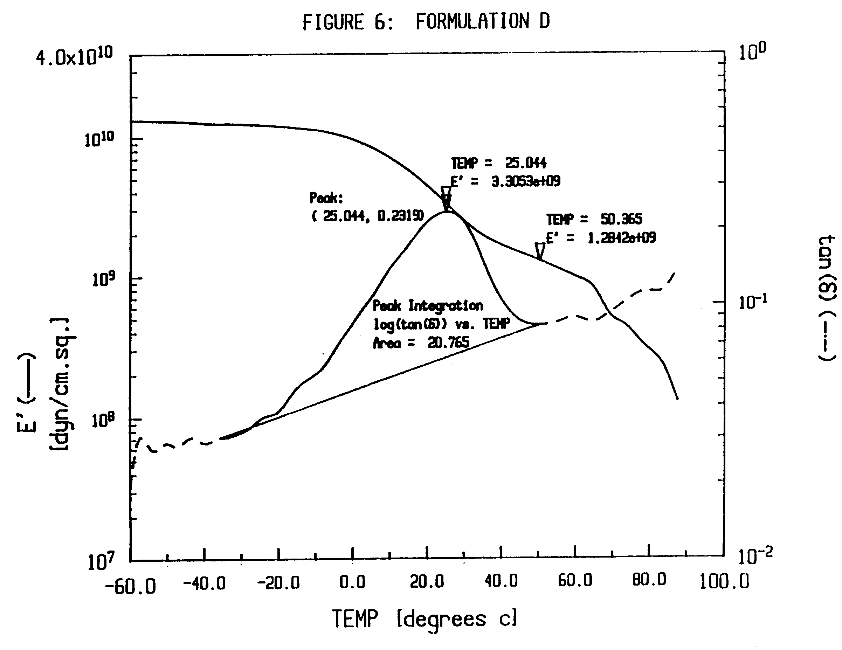

The DMA curve for Formula D is given in Figure 6. The DMA data show that the $T_g$ is higher than that for Formula C of Example 4 by about 19° C, the extension on the rubbery plateau is still the same, and the area under tan $\delta$ is lightly lower. The room temperature performance of this ink is less flexible, but more energy dissipative and therefore tougher because the tan $\delta$ peaks at about room temperature.

EXAMPLE 6

Formulation E illustrates a hot melt ink with an extremely low $T_g$. The ink carrier composition was formulated according to the procedure followed in Example 1, using the following ingredients:

| Ingredients | Weight % |
|---|---|
| Kemamide S-180 | 31.0 |
| Tetra-amide | 21.5 |
| KE-311 | 27.5 |
| Santicizer | 20.0 |

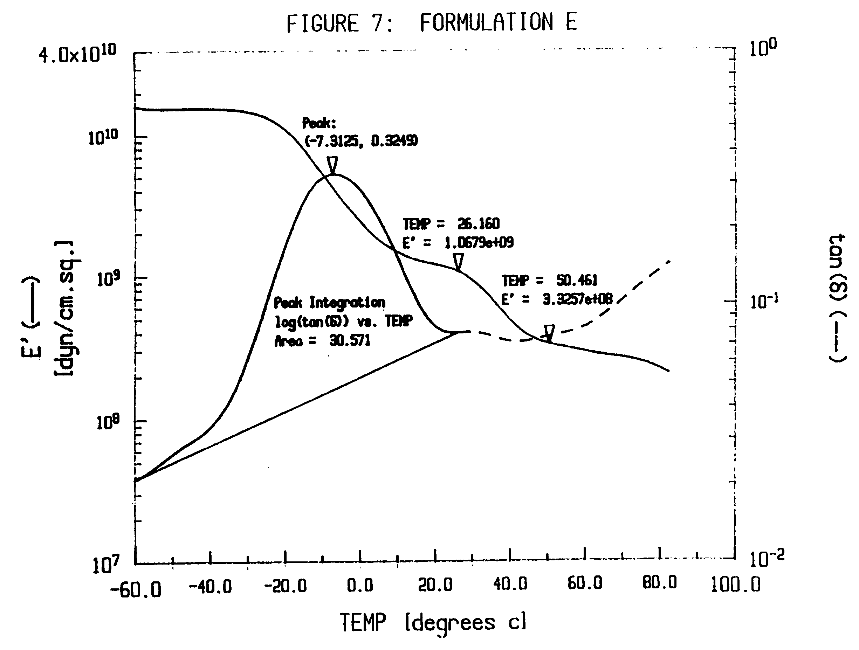

The DMA curve for Formulation E is given in Figure 7. The $T_g$ of the formulation is about -7.3° C, which is well below room temperature. The ink is very flexible at room temperature. The ink is the toughest of all of the formulations, which is obvious from the high value of the area under the tan $\delta$ peak. The profile of the modulus curve shows two distinct transitions, giving one plateau for room temperature performance and another at a lower modulus for easier transfer and fixing.

EXAMPLE 7

This example demonstrates the high chroma ($C^*_{ab}$) and lightness ($L^*$) values of the phase change ink compositions of the present invention.

The reflectance spectra test data for the primary and secondary colors are listed in Tables 1-2 below for the formulations used in Examples 2 and 3. (Measurement conditions were: Illuminate C, 2 degree observer, small area view, specular included, wavelength interval 230 nm.)

Table 1

| (Formulation B) | | | | | | | | | |
|---|---|---|---|---|---|---|---|---|---|
| Color | L* | A* | B* | DL* | Da* | Db* | DC*ab | Hab | C*ab |
| Black | 22.98 | 2.36 | -2.78 | -71.21 | 1.54 | -1.20 | 1.87 | 310.34 | 3.65 |
| Cyan | 56.95 | -26.61 | -39.88 | -37.25 | -27.44 | -38.30 | 46.16 | 236.29 | 47.95 |
| Magenta | 60.42 | 78.30 | -29.60 | -33.78 | 77.47 | -28.07 | 81.92 | 339.29 | 83.71 |
| Yellow | 89.43 | -13.62 | 87.02 | -4.77 | -14.44 | 88.60 | 86.30 | 99.89 | 88.08 |
| Green | 56.68 | -48.21 | 22.63 | -37.52 | -49.03 | 24.41 | 51.56 | 154.66 | 53.34 |
| Red | 58.31 | 54.80 | 37.57 | -35.89 | 53.98 | 39.15 | 64.66 | 34.43 | 66.44 |
| Blue | 37.62 | 35.07 | -53.99 | -56.58 | 34.25 | -52.41 | 62.60 | 303.01 | 64.38 |
| Hammermill Paper Background) | 94.20 | 0.83 | -1.58 | .-- | .-- | .-- | .-- | 297.57 | 1.78 |

Table 2

| (Formulation F) | | | | | | | | | |
|---|---|---|---|---|---|---|---|---|---|
| Color | L* | A* | B* | DL* | Da* | Db* | DC*ab | Hab | C*ab |
| Black | 23.45 | 2.34 | -3.24 | -71.18 | 1.53 | -1.26 | 1.86 | 305.81 | 4.00 |
| Cyan | 56.76 | -26.11 | -41.40 | -37.86 | -26.91 | -39.42 | 46.80 | 237.77 | 48.94 |
| Magenta | 48.79 | 83.05 | -35.14 | -45.84 | 82.24 | -33.16 | 88.04 | 337.07 | 90.18 |
| Yellow | 90.57 | -17.23 | 90.54 | -4.06 | -18.03 | 92.53 | 90.02 | 100.77 | 92.17 |
| Red | 49.88 | -56.01 | 32.45 | -44.75 | -55.20 | 34.44 | 62.59 | 30.09 | 64.73 |
| Green | 55.09 | 56.24 | 25.48 | -39.54 | 57.04 | 27.46 | 59.60 | 155.62 | 61.74 |
| Blue | 30.65 | 39.98 | -56.00 | -63.98 | 39.17 | -54.02 | 66.66 | 305.52 | 68.81 |
| Hammermill Paper Background) | 94.63 | 0.81 | -1.98 | .-- | .-- | .-- | .-- | 292.16 | 2.14 |

Having illustrated and described the principles of the invention in a preferred embodiment thereof, it should be readily apparent to those skilled in the art that the invention can be modified in arrangement and detail without departing from the scope of the claims. For example, the ink carrier composition employed with the colorant to form the ink composition of the present invention can be a low viscosity semicrystalline or crystalline amide wax, an ester wax, a polyethylene wax, a microcrystalline wax or a paraffin in combination with a hydrocarbon or resin based amorphous material, or an oligomer, or low molecular weight polymer or copolymer, or a tackifier, or a plasticizer and combinations thereof.

As noted earlier, the phase change ink formulations of the invention may be employed in processes of printing upon a substrate in which processes an intermediate transfer surface is used. Figures 13 to 15 illustrate diagrammatically an imaging apparatus for use in such a process to transfer an inked image from an intermediate transfer surface to a final receiving substrate. With reference to the illustration in Figure 13 of print imaging apparatus 10, a printhead 11 is supported by an appropriate housing and support elements (not shown) for either stationary or moving utilization to place an ink in the liquid or molten state on the supporting intermediate transfer surface 12 that is applied to the surface of the supporting surface 14. Intermediate transfer surface 12 is a liquid layer that is applied to the supporting surface 14, which is shown as a drum, but may also be a web, platen, or any other suitable design, by contact with an applicator, such as a metering blade, roller, web or the shown wicking pad 15 contained within applicator assembly 16. The supporting surface 14 may be formed from any appropriate material, such as metals including but not limited to aluminium, nickel or iron phosphate, elastomers including but not limited to fluoroelastomers, perfluoroelastomers, silicone rubber and polybutadiene, plastics including but not limited to polytetrafluorethylene loaded with polyphenylene sulfide, thermoplastics such as polyethylene, nylon and FEP (fluorinated ethylene propylene), thermosets such as acetals, or ceramics could be employed as long as the exposed surface is sufficiently rigid to deform the transferred image-forming ink 26 when the final receiving medium passes between it and the transfer and fixing roller 22 and sufficiently smooth so as not to interfere with the ability of the intermediate transfer surface or liquid layer to support the image-forming ink 26 of FIG 2. The preferred material is anodized aluminium.

Applicator assembly 16 optionally contains a reservoir and wicking pad 15 for the liquid and most preferably contains a web and web advancing mechanism (both not shown) to periodically present fresh web for contact with the drum 14. Wicking pad 15 or the web is preferably any appropriate nonwoven synthetic textile with a relatively smooth surface. The web can be polyester. A preferred configuration can employ the smooth wicking pad 15 mounted atop a porous supporting material 18, such as a polyester felt. Both materials are available from BMP Corporation as BMP products NR90 and PE 1100-UL, respectively (BMP Corporation, c/o BMP America, 11625 Maple Ridge Road, Medina, New York, NY 14103, USA). Applicator apparatus 16 is mounted for retractable movement upward into contact with the surface of drum 14 and downwardly out of contact with the surface of the drum 14 and its liquid layer 12 by means of appropriate mechanism, such as an air cylinder or an electrically actuated solenoid.

FIG 13 shows a final substrate guide 20 that passes the final receiving substrate 28, such as paper, from a positive feed device (not shown) and guides it through the nip formed by the opposing arcuate surfaces of the roller 22 and the intermediate transfer surface 12 supported by the drum 14. Stripper fingers 25 (only one of which is shown) may be pivotally mounted to the imaging apparatus 10 to assist in removing any paper or other final receiving substrate media from the exposed surface of the liquid layer forming the intermediate transfer surface 12. Roller 22 has a metallic core, preferably steel, with an elastomeric covering that has a 40 to 45 Shore D rating. Suitable elastomeric covering materials include silicones, urethanes, nitriles, EPDM and other appropriately resilient materials. The elastomeric covering on roller 22 engages the final receiving substrate 20 on the reverse side to which the ink image 26 is transferred from the exposed surface of the liquid layer forming the intermediate transfer surface 12. This fuses or fixes the ink image 26 to the surface of the final receiving surface so that the ink image is spread, flattened and adhered.

The ink utilized in the process and system of the instant invention is preferably initially in solid form and is then changed to a molten state by the application of heat energy to raise the temperature to about 85° C to about 150° C. Elevated temperatures above this range will cause degradation or chemical breakdown of the ink. The molten ink is then applied in raster fashion from the ink jets in the printhead 11 to the exposed surface of the liquid layer forming the intermediate transfer surface 12, where it is cooled to an intermediate temperature and solidifies to a malleable state in which it is transferred to the final receiving surface 28 via a contact transfer by entering the nip between the roller 22 and the liquid layer forming the intermediate transfer surface 12 on the support surface or drum 14. This intermediate temperature where the ink is maintained in its malleable state is between about 30° C to about 80° C.

Once the solid malleable ink image enters the nip, it is deformed to its final image conformation and adheres or is fixed to the final receiving substrate either by the pressure exerted against ink image 26 on the final receiving substrate 28 by the roller 22 alone, or by the combination of the pressure and heat supplied by heater 21 and/or heater 19. Heater 24 could optionally be employed to supply heat to facilitate the process at this point. The pressure exerted on the ink image 26 is between about 68.948 kPa to about 13.790 MPa (about 10 to about 2000 psi), more preferably between about 3.447 to about 6.895 MPa (about 500 to about 1000 psi), and most preferably between about 5.171 to about 5.860 MPa (about 750 to about 850 psi). The pressure must be sufficient to have the ink image 26 adhere to the final receiving substrate 28 and be sufficiently deformed to ensure that light is transmitted through the ink image rectilinearly or without significant deviation in its path from the inlet to the outlet, in those instances when the final receiving substrate is a transparency. Once adhered to the final receiving substrate 28, the ink image is cooled to ambient temperature of about 20-25 degrees Centigrade. The ink comprising the ink image must be ductile, or be able to yield or experience plastic deformation without fracture when kept at a temperature above the glass transition temperature. Below the glass transition temperature the ink is brittle. The temperature of the ink image in the ductile state is between about -10° C and to about the melting point or less than about 85° C.

FIG 15 diagrammatically illustrates the sequence involved when an ink image 26 is transferred from the liquid layer forming the intermediate transfer surface 12 to the final receiving substrate 28. The ink image 26 transfers to the final receiving substrate 28 with a small, but measurable quantity of the liquid in the intermediate transfer surface 12 attached thereto as an outer layer 29 . The average thickness of the transferred liquid layer 29 is calculated to be about 0.8 nanometers. Alternatively, the quantity of transferred liquid layer 29 can be expressed in terms of mass as being from about 0.1 to about 200 milligrams, and more preferably from about 0.5 to about 50 milligrams, and most preferably from about 1 to about 10 milligrams per page of final receiving substrate 28. This is determined by tracking on a test fixture the weight loss of the liquid in the applicator assembly 16 at the start of the imaging process and after a desired number of sheets of final receiving substrate 28 have been imaged.

Some appropriately small and finite quantity of the liquid in the liquid layer forming the intermediate transfer surface 12 also is transferred to the final receiving substrate in areas adjacent the transferred ink image 26. This relatively small transfer of the liquid from the intermediate transfer surface 12 with the ink image 26 and to the non-imaged areas on the final receiving substrate 28 can permit as many as ten pages or more of the final receiving substrate 28 to be imaged before it is necessary to replenish the sacrificial liquid layer forming the intermediate transfer surface 12. Replenishment may be necessary after fewer final imaged copies, depending on the quality and nature of the final receiving surface 28 that is utilized. Transparencies and paper are the primary intended media for image receipt. Commonly called "plain paper" is the preferred medium, such as that supplied by Xerox Corporation and many other companies for use in photocopy machines and laser printers. Many other commonly available office papers are included in this category of plain papers, including typewriter grade paper, standard bond papers, and letterhead paper. Xerox 4024 paper is assumed to be a representative grade of plain paper for the purposes of this invention.

While the thickness of the liquid layer forming the intermediate transfer surface 12 on the supporting surface or drum 14 can be measured, such as by the use of reflectance Fourier Transform infrared spectroscopy or a laser interferometer, it is theorized that the thickness can vary from about $5 \times 10^{-8}$ m to about $6 \times 10^{-5}$ m (about 0.05 microns to about 60 microns), more preferably from about $1 \times 10^{-7}$ m to about $5 \times 10^{-5}$ m (about 0.1 microns to about 50 microns), and most preferably from about $1 \times 10^{-6}$ m to about $1 \times 10^{-5}$ m (about 1 micron to about 10 microns). The thickness of the layer forming the intermediate transfer surface 12 can increase if rougher surfaced supporting surfaces or drums 14 are employed. The surface topography of the supporting surface or drum 14 can have a roughness average ($R_a$) of from about 25.4 nm (about 254 Angstroms) to about 2540 nm (about 25,400 Angstroms) (about 1 microinch to about 100 microinches), and a more preferred range of from about 127 nm to about 381 nm (about 5 to about 15 microinches). The image quality will degrade when a liquid layer thicker than about $6 \times 10^{-5}$ m (about 60 microns) is used to form the intermediate transfer surface 12.

Suitable liquids that may be employed as the intermediate transfer surface 12 include water, fluorinated oils, glycol, surfactants, mineral oil, silicone oil, functional oils or combinations thereof. Functional oils can include, but are not limited to , mercapto-silicone oils, fluorinated silicone oils and the like.

The liquid layer 12 that forms the intermediate transfer surface on the surface of drum 14 is heated by an appropriate heater device 19. Heater device 19 may be a radiant resistance heater position as shown or more preferably, positioned internally within the drum 14. Heater devices 21 and 24 can also be employed in the paper or final receiving substrate guide apparatus 20 and in the fusing and fixing roller 22, respectively. Heater device 19 increases the temperature of the liquid intermediate transfer surface from ambient temperature to between about 25° C to about 70° C or higher. This temperature is dependent upon the exact nature of the liquid employed in liquid layer or intermediate transfer surface 12 and the ink employed. A more preferred range is between about 30° C to about 60° C, and a most preferred range is from about 45° C to about 52° C.

Heater 21 preheats the final receiving medium prior to the fixation of the ink image by being set to heat between about 70° C to about 200° C, more preferably to between about 85° C and about 140° C, and most preferably to between about 110° C to about 130° C. It is theorized that heater 21 raises the temperature of the final receiving medium to between about 90° C and about 100° C. However, the thermal energy of the receiving media is kept sufficiently low so as not to melt the ink upon transfer to the final receiving substrate 28. Heater 24, when employed, heats the transfer and fixing roller 22 to a temperature of between about 25° C and about 200° C and alternatively may also be employed internally within roller 22.

The ink used to form the ink image 26 preferably must have suitable specific properties for viscosity. Initially, the viscosity of the molten ink must be matched to the requirements of the ink jet device utilized to apply it to the intermediate transfer surface 12 and optimized relative to other physical and rheological properties of the ink as a solid, such as yield strength, hardness, elastic modulus, loss modulus, ratio of the loss modulus to the elastic modulus, and ductility. The viscosity of the phase change ink carrier composition has been measured on a Ferranti-Shirley Cone Plate Viscometer with a large cone. At about 140° C a preferred viscosity of the phase change ink carrier composition is from about $5 \times 10^{-3}$ Pa.s to about $3 \times 10^{-2}$ Pa.s (about 5 to about 30 centipoise), more preferably from about $1 \times 10^{-2}$ Pa.s to about $2 \times 10^{-2}$ Pa.s (about 10 centipoise to about 20 centipoise), and most preferably from about $1 \times 10^{-2}$ Pa.s to about $1.5 \times 10^{-2}$ Pa.s (about 11 centipoise to about 15 centipoise). The surface tension of suitable inks is between about $2.3 \times 10^{-4}$ and about $5 \times 10^{-4}$ N/centimeter (about 23 and about 50 dynes/centimeter). An appropriate ink composition is that described in U.S. Patent No. 4,889,560 (assigned to Tektronix, Inc.).

Such an ink has a composition comprising a fatty amide-containing material employed as a phase change ink carrier composition and a compatible colorant. The fatty amide-containing material comprising a tetraamide compound and a monoamide compound. The phase change ink carrier composition is in a solid phase at ambient temperature and in a liquid phase at elevated operating temperature. The phase change ink carrier composition can comprise from about 10 to about 50 weight percent of a tetraamide compound, from about 30 to about 80 weight percent of a secondary mono-amide compound, from about 0 to about 40 weight percent of a tackifier, from about 0 to about 25 weight percent of a plasticizer, and from about 0 to about 10 weight percent of a viscosity modifying agent.

The subject phase change ink used in the instant invention is formed from a phase change ink carrier composition which exhibits excellent physical properties. For example, the subject phase change ink, unlike prior art phase change inks, exhibits a high level of lightness, chroma, and transparency when utilized in a thin film of substantially uniform thickness. This is especially valuable when color images are conveyed using overhead projection techniques. Furthermore, the preferred phase change ink compositions exhibit the preferred mechanical and fluidic properties mentioned above when measured by dynamic mechanical analyses (DMA), compressive yield testing and viscometry. More importantly, these work well when used in the printing process of the instant invention utilizing a liquid layer as the intermediate transfer surface. The phase change ink composition and its physical properties are discussed in greater detail earlier in the specification.

The transmission spectra for each of the phase change inks used in the process of this invention were evaluated on a commercially available spectrophotometer, the ACS Spectro-Sensor II, in accordance with the measuring methods stipulated in ASTM 1E805 (Standard Practice of Instrumental Methods of Color or Color Difference Measurements of Materials) using the appropriate calibration standards supplied by the instrument manufacturer. For purposes of verifying and quantifying the overall colorimetric performance of the inks used in the process and as a part of this invention, measurement data were reduced, via tristimulus integration, following ASTM E308 (Standard Method for Computing the colors of Objects using the CIE System) in order to calculate the 1976 CIE L* (Lightness), a* (redness-greenness), and b* (yellowness-blueness), (CIELAB) values for each phase change ink sample. In addition, the values for $Q_{hab}$ELAB Psychometric Chroma, $C^*_{ab}$, and CIELAB Psychometric Hue Angle, were calculated according to publication CIE15.2, Colorimetry (Second Edition, Central Bureau de la CIE, Vienna, 1986).

Unlike conventional phase change ink carriers, the nature of the phase change ink carrier composition of the inks used in the process of the present invention is such that thin films of substantially uniform thickness exhibit a relatively high L* value. For example, a substantially uniform thin film of about $2X 10^{-5}$ m (about 20 micron) thickness of the phase change ink carrier composition of this invention preferably has an L* value of at least about 65, more preferably at least about 75, and most preferably at least about 85.

The phase change inks used herein have a relatively high C*ab value when measured as a thin film of substantially uniform thickness. Previously, conventional phase change inks have had a very low degree of rectilinear light transmissivity, even in thin films of substantially uniform thickness. The phase change ink composition used in the process of this invention has C*ab values, when applied as a substantially uniform thin film of about 10 micron thickness with subtractive primary yellow, magenta and cyan color phase change ink compositions, that preferably are at least about 40 for said yellow ink composition, at least about 65 for said magenta ink composition, and at least about 30 for the cyan ink composition.

It is also important that the black color phase change ink component be at a minimum light transmissivity level so that the color intensity of the ink is maximized. Accordingly, the L* value of a substantially uniform thin film of about 1 x $10^{-5}$m (about 10 microns) thickness of a black color phase change ink is preferably not more than about 35, more preferably not more than about 30, and most preferably not more than about 25.

The respective phase change ink and ink carrier compositions, when transferred to the final substrate in a thin film, are quite durable. One indication of durability is abrasion resistance. For purposes of this invention, abrasion resistance is determined by testing a finished print sample of the phase change ink produced from the carrier composition in a Teledyne Taber Abrader, Model 5130, utilizing CS-230 Abrasion wheels loaded with 500 gram weights. The abrasion wheels are resurfaced after each sample with an S-11 resurfacing disk. Samples printed on paper were tested according to ASTM D406(F84 (Standard Test Method For Abrasion Resistance of Organic Coatings by the Taber Abrader). Samples printed on light transmissive thin films were tested using ASTM D1304Q-85 (Standard Test Method For Resistance of Transparent Plastics to Surface Abrasion). Print samples were tested as described above, and the results of those tests demonstrated excellent abrasion resistance.

A further test employed to evaluate the durability of phase change inks and ink carrier compositions is an offset transfer or blocking test. This determines whether the phase change ink printed on a substrate will adhere to an adjacent substrate at ambient or elevated temperatures when the printed products are stacked one on top of the other. The blocking test is conducted using an indirect transfer method by printing samples of the phase change ink produced from the carrier composition onto a paper or thin film substrate and placing that substrate in a manila folder under a one pound piece of aluminum, about 0.216m (about 8.5 inches) wide and about 0.279m (about 11 inches) long to evenly distribute the weight of a 4.536 kg (10 pounds) block. These printed samples are placed in an oven for 24 hours at a constant temperature of about 60° C. Print samples of the phase change ink of the present invention, subjected to the above described blocking test showed no blocking.

The above-defined DMA properties of the phase change ink compositions were experimentally determined. These dynamic measurements were done on the Rheometrics Solids Analyzer (RSA II) manufactured by Rheometrics, Inc. of Piscataway, New Jersey, using a dual cantilever beam geometry. The dimensions of the sample were about $2.0 \pm 1.0$ mm thick, about $6.5 \pm = 0.5$ mm wide, about $54.0 \pm 1.0$ mm long. A time/cure sweep was carried out under a desired force oscillation or testing frequency of about 1 Hz and an auto-strain range of about $1.0 X 10^{-5}$% to about 1%. The temperature range examined was about -60° to about 90° C. The preferred phase change ink compositions typically are (a) flexible at a temperature of about -10 to about 80° C, (b) have a temperature range for the glassy region from about -100 to 40° C, the value of E' being from about $1.5 x 10^8$ to $1.5 x 10^{10}$ Pa (about $1.5 X 10^9$ to $1.5 X 10^{11}$ dyne/cm$^2$), (c) have a temperature range for the transition region from about -30 to about 60° C, (d) have a temperature range for the rubbery region of E' from about -10 to 100° C, the value of E' being from about $1.0 \times 10^5$ to $1.0 \times 10^{10}$ Pa (about $1.0 \times 10^6$ to $1.0 \times 10^{11}$ dyne/cm$^2$), and (e) have a temperature range for the terminal region of E' from about 30 to about 160° C. Furthermore, the glass transition temperature range of the phase change ink compositions are from about -40 to about 40° C, the temperature range for integrating under the tan $\delta$ peak of the phase change ink composition is from about -80 to about 80° C with integration values ranging from about 5 to about 40, and the temperature range for the peak value of tan $\delta$ of the phase change ink is from about -40 to about 40° C with a tan $\delta$ of about $1.0 \times 10^{-2}$ to about $1.0 \times 10$ at peak.

A representative plot of the storage modulus, E', as a function of temperature at 1 Hz for an appropriate phase change ink composition for use in the printing process of the present invention can be produced. The curve will be divided up into four distinct regions: glassy, transition, rubbery, and terminal.

In the glassy region the ink behaves similar to a hard, brittle solid i.e., E' is high, about $1 \times 10^9$ Pa (about $1 \times 10^{10}$ dyne/cm$^2$). This is because in this region there is not enough thermal energy or long enough time for the molecules to move. This region needs to be well-below room temperature so the ink will not be brittle and affect the room temperature performance on paper.

The transition region is characterized by a large drop in the storage modulus of about one order of magnitude. This is because the molecules have enough thermal energy or time to undergo conformational changes. In this region, the ink changes from being hard and brittle to being tough and leathery.

The rubbery region describes a slightly decreasing plateau. In this region, there is a short term elastic response to the deformation that gives the ink its flexibility. It is theorized that the impedance to motion or flow in this region is due to entanglements of molecules or physical cross-links from crystalline domains. Fine tuning of the ink to get this plateau in the appropriate temperature range for good transfer and fixing and room temperature performance is of great importance in formulating these phase change ink compositions. The rubbery region encompasses the ink in both its malleable state during the transfer and fixing or fusing step and its final ductile state on the final receiving substrate.

Finally, in the terminal region, there is another drop in the modulus. It is believed in this region that the molecules have sufficient energy or time to flow and overcome the entanglements.

The general temperature profile of tan $\delta$ for a phase change ink composition for use in the printing process of the present invention can be described as follows. In the glassy region, tan $\delta$ is small. The peak of the damping curve occurs in the transition region and indicates the $T_g$ of the material. The area under the tan $\delta$ curve gives an indication of the relative toughness of the ink, which is a measure of the energy dissipated during deformation. Since tan $\delta$ is equal to the loss modulus divided by the storage modulus, it is not necessary to specify the profiles of both the tan $\delta$ and loss modulus.

The phase change ink compositions were also analyzed by compressive yield testing. The compressive yield strength measurements were done on an MTS SINTECH 2/D mechanical tester manufactured by MTS Sintech, Inc. of Cary, North Carolina, using small cylindrical sample blocks. The dimensions of a typical sample are about $19.0 \pm 1.0$ mm X about $19.0 \pm 1.0$ mm. Isothermal yield stress was measured as a function of temperature (about 25° to about 80° C) and strain rate. The material was deformed up to about 40%.

The preferred yield stresses as a function of temperature for suitable phase change ink compositions for use in the indirect printing process of the present invention are described by an equation as follows:

$$YS = mT + I$$

wherein YS which is a function of temperature, is the yield stress, m is the slope, T is the temperature, and I is the intercept.

Under non-process conditions, i.e., after the final printed product is formed or conditions under which the ink sticks are stored, and the ink is in a ductile state or condition at a temperature range of from at least about 10° to about 60° C, the preferred yield stress values are described by m as being from about $-62.053 \pm -13.790$ kPa (about $-9 \pm -2$ psi)/° C to about $-248.211 \pm -13.790$ kPa (about $-36 \pm -2$ psi)/° C and I as being from about 5.516 MPa $\pm$ 689.48 kPa (about $800 \pm 100$ psi) to about 15.168 MPa $\pm$ 689.48 kPa (about $2200 \pm 100$ psi). More preferably, m is about $-206.843 \pm -13.790$ kPa (about $-30 \pm -2$ psi)/° C and I is about 11.645 MPa $\pm$ 689.48 kPa (about $1700 \pm 100$ psi). Under process conditions, i.e., during the indirect printing of the ink from an intermediate transfer surface onto a substrate while the ink is in a malleable solid condition or state, at a temperature of from at least about 30° C to about 80° C, the preferred stress values are described by m as being from about $-41.368 \pm -13.790$ kPa (about $-6 \pm -2$ psi)/° C to about $-248.211 \pm -13.790$ kPa (about $-36 \pm -2$ psi)/° C and I as being from about 5.516 MPa $\pm$ 689.48 kPa (about $800 \pm 100$ psi) to about 1.103 MPa $\pm$ 689.48 kPa (about $1600 \pm 100$ psi). More preferably, m is about $-62.053 \pm -13.790$ kPa (about $-9 \pm -2$ psi)/° C and I is about 6.550 MPa $\pm$ 689.48 kPa (about $950 \pm 100$ psi).

In operation the support surface or drum 14 has a layer of liquid intermediate transfer surface applied to its surface by the action of the applicator assembly 16. Assembly 16 is raised by an appropriate mechanism (not shown), such as an air cylinder, until the web 15 is in contact with the surface of the drum 14. The liquid is retained within a reservoir (not shown) within the assembly 16 and passes through the porous supporting material 18 until it saturates the web 15 to permit a uniform layer of desired thickness of the liquid to be deposited on the surface of the drum 14. The drum 14 rotates about a journalled shaft in the direction shown in FIG 1 while the heater 19 heats the liquid layer and the surface of the drum 14 to the desired temperature. Once the entire periphery of the drum 14 has been coated, the applicator apparatus is lowered to a non-contact position with the liquid layer forming the intermediate transfer surface 12 on the exterior of the drum 14.

Ink is applied to the exposed surface of the liquid intermediate transfer surface 12 by the printhead 11. The ink is applied in molten form, having been melted from its solid state form by appropriate heating means (not shown). The ink image 26 solidifies on the surface of the liquid by cooling to a malleable solid intermediate state as the drum continues to rotate, entering the nip formed by the roller 22 and the curved surface of the intermediate transfer surface 12 supported by the drum 14. The ink image 26 is deformed to its final image conformation and adhered to the final receiving surface 28 by being pressed there against. The ink image 26 is thus transferred and fixed to the final receiving surface 28 by the pressure exerted on it in the nip by the resilient or elastomeric surface of the roller 22. Stripper fingers 25 help to remove the imaged final receiving surface 28 from the liquid intermediate transfer surface 12 as the drum rotates. The ink image 26 then cools to ambient temperature where it possesses sufficient strength and ductility to ensure its durability.

After a predetermined number of imagings, such as 10 or fewer as needed, the applicator assembly 16 is actuated to raise upward into contact with the sacrificial intermediate transfer surface 12 to replenish the liquid forming the surface 12. Examples I to VI which follow are presented by way of example only, for the purposes of further illustration of the processes described with reference to Figures 13 to 15, and in particular to illustrate, by way of example only, the type of materials that can be successfully employed as the liquid intermediate transfer surface 12.

EXAMPLE I

A test fixture having a rotatably mounted about 0.102 mm (about 0.004 inch) thick drafting Mylar® plastic-covered aluminium drum with the matte side of the plastic facing out and a diameter of about 0.105m (about 4.13 inches) was positioned adjacent and in close proximity to a transfer and fusing roller of smaller diameter. A piezoelectrically driven printhead with phase change ink was positioned intermediate the drum and the transfer and fusing roller to deliver the primary colors of cyan, magenta, yellow and black to the exposed surface of a thin liquid layer of an intermediate transfer surface in raster fashion. The drum surface was hand coated with a liquid layer consisting of a mixture of about 79.5% by weight deionized water, about 20% by weight polyethylene glycol available as PEG 200 from Aldrich Chemical Company, and about 0.5% by weight of a fluorinated surfactant leveling agent commonly used in epoxies and available from the 3M Company under the tradename Fluorad FC-430 coating additive. This mixture was applied manually with a hand wipe available from Kimberly-Clark under the KAYDRY tradename to form the liquid intermediate transfer surface. The liquid layer was not entirely evenly applied to the drum surface since more thickly coated areas were noticably visible. The drum temperature was maintained at about 29° C to about 30° C. Paper was used as the final receiving substrate and was preheated by an external heating device with a temperature of about 100° C prior to being brought into contact with the transferred ink image. The transfer and fusing roller was also heated by an external heating device having a setpoint of about 120°C.

During imaging the drum was rotated at a surface speed of about 0.846 m per second (about 33.3 inches per second). During transfer and fixing, the surface speed of the roller was about 0.127 m per second (about 5 inches per second). A full color test image was imaged by the printhead on the liquid intermediate transfer layer and transferred to Xerox 4024 plain copy paper. The transferred image was of good quality with only a few pixels left untransferred to the paper.

EXAMPLE II

The same test fixture and conditions as described above were employed, except that the liquid used to form the liquid intermediate transfer layer was an alkylphenyl polyglycol nonionic surfactant sold under the tradename Triton® X-100 by Spectrum Chemical Manufacturing Corporation of Gardenia, CA. Multiple copies of the same test image as in Example I were made, producing prints with somewhat tacky imaged areas. When the print sheets were stacked one on top of another, some parts of the color image were transferred to the back of the overlying sheet of paper. It appeared as though the liquid used as the intermediate transfer layer penetrated the ink, partially plasticizing it. However, the inked image was successfully transferred from the liquid intermediate transfer surface to the paper.

EXAMPLE III

The same test fixture and conditions as were utilized in Example I were employed, except that the fluorinated surfactant leveling agent sold under the tradename Fluorad FC-430 by 3M Corporation was employed as the liquid intermediate transfer surface. Two prints were made of the same full color test image as in Example I, with incomplete areas of transfer and a slightly tacky feeling in the printed areas.

EXAMPLE IV

The same test fixture and conditions as were utilized in Example I were employed, except that the liquid was applied in a wicking fashion with a wick/felt laminate applicator having a steel backing plate. The applicator had a force measured in air pressure of about 134.448 kPa (about 19.5 pounds per square inch) or about 6.804 kg (about 15 pounds) of force pressing it against the surface of the drum while applying the liquid layer. About 80 cubic centimeters of the liquid was placed into the applicator's reservoir. Five prints were made at the initial transfer and fixing speed of about 0.127 m per second (about 5 inches per second). The speed was increased by about $2.54 \times 10^{-2}$ m per second up to about 0.279 m per second (about 1 inch per second up to about 11 inches per second) until a total of 51 full color test prints of the type in Example I were made, including 2 transparencies made at a fixing speed of about 0.279 m per second (about 11 inches per second). Successful transfers were made at each transfer speed, but abrasion testing disclosed a gradual decrease in adherence of the images to the paper at the higher transfer speeds. Acceptable quality color prints were made up to transfer speeds of about 0.178 m per second (about 7 inches per second).

EXAMPLE V

The same test fixture and conditions as were utilized in Example I were employed, except that the liquid was deionized water and was applied with a wick/felt laminate applicator in wicking fashion to a depth of about 1 mil. The applicator employed a steel backing plate. The liquid was intended to be delivered in a wicking fashion. The applicator delivered the liquid with about 18 pounds of force, forcing it against the surface of the drum while applying the liquid layer. About 80 cubic centimeters of the liquid was placed into the applicator's reservoir. Several prints were made of a four color bar pattern at an initial transfer and fixing speed of about 0.127 m per second (about 5 inches per second). The imaging surface speed was about 0.592 m per second (about 23.3 inches per second) with an application time at the imaging speed of about 800 microseconds. The ink drop ejection rate was set at about 7 Khz. The heater for the final receiving substrate, which in this case was paper, was set at about 100° C. The transfer and fixing roller's heater had a set point of about 120° C. The surface of the drum supporting the liquid layer was heated to between about 30° C to about 31° C, which caused some accelerated evaporation of the deionized water forming the liquid layer and required a relatively fast transfer speed. Successful four color transfers were made with each attempt, although it appeared that too thick of a layer of the deionized water would result in displaced dots.

EXAMPLE VI

A test fixture similar to that employed in Example I was used, except that the support drum was aluminum with an anodized surface finish. The drum had a diameter of about 0.101m (about 3.979 inches) and was externally heated across an air gap with a resistance heater that was linked to a control with an established setpoint of about 47° C.

The heated drum surface was coated with silicone oil sold under the tradename Dow Corning 200. The oil was applied by being contacted for less than about 0.6 seconds during two rotations of the drum at an application speed of about 40 inches per second with an oil impregnated polyester web contained within a raisable cassette assembly. The web was pressed into contact with the drum surface with a force of about 10 pounds. Once the drum surface was fully coated with the liquid layer that forms the intermediate transfer surface, the cassette assembly was lowered out of contact with the drum.

The paper final receiving substrate was preheated by a flat and flexible vulcanized silicone heater attached to the paper feed guides.

**Claims**

1. A process for indirectly applying a selective phase change ink composition to a substrate, which process comprises:-

    a. combining a phase change ink colorant composition and a modified phase change ink carrier composition to produce said selective phase change ink composition having predetermined fluidic and mechanical properties which meet the parameters needed for indirect application thereof;

    b. raising the temperature of said selective phase change ink composition to a first elevated operating temperature to form a liquid phase selective phase change ink composition;

    c. providing an intermediate transfer means at a second elevated operating temperature for indirectly applying said selective phase change ink composition in a liquid phase to said substrate.

d. applying said selective phase change ink composition to said intermediate transfer means in a predetermined pattern and in a liquid phase;

e. forming said predetermined pattern of said selective phase change ink composition in a solid phase on the intermediate transfer means at a second elevated operating temperature;

f. transferring said selective phase change ink composition from said intermediate transfer means to said substrate; and

g. fixing said selective phase change ink composition to said substrate to form a printed substrate, said selective phase change ink composition having (1) a compressive yield strength which will allow it to flow in a malleable manner when compressive forces are applied thereto at the second elevated temperature, and sufficient internal cohesive strength to resist failure, when said selective phase change ink composition is fixed to said substrate, and (2) a high degree of ductility on said substrate after said fixing, thin films of substantially uniform thickness of said selective phase change ink composition having a high degree of lightness and chroma.

2. A process of printing using a phase change ink composition, which process comprises:-

a. combining a phase change ink colorant composition and a modified phase change ink carrier composition to produce a selective phase change ink composition having predetermined fluidic and mechanical properties which meet the parameters needed for indirect application thereof;

b. raising the temperature of said selective phase change ink composition to a first elevated operating temperature to form a liquid phase selective phase change ink composition;

c. providing an intermediate transfer means at a second elevated operating temperature less than the first operating temperature for receiving said selective phase change ink composition in a liquid phase;

d. applying said selective phase change ink composition in a liquid phase to said intermediate transfer means in a predetermined pattern;

e. cooling said predetermined pattern of said selective phase change ink composition to a malleable solid phase on the intermediate transfer means to a temperature less than the second elevated operating temperature;

f. transferring said predetermined pattern of said malleable solid phase selective phase change ink composition from said intermediate transfer means to said substrate;

g. fixing the predetermined pattern of said malleable solid phase selective phase change ink composition to said substrate to form a printed substrate, said selective phase change ink composition having a compressive yield strength which will allow it to flow in a malleable manner when compressive forces are applied thereto and sufficient internal cohesive strength to resist failure when said selective phase change ink composition is fixed to said substrate; and

h. cooling the predetermined pattern of said malleable solid phase change ink composition to ambient temperature such that it possesses a high degree of ductility on said substrate after said fixing, thin films of uniform thickness of said cooled to ambient temperature selective phase change ink composition having a high degree of lightness and chroma.

3. A process as claimed in Claim 1 or Claim 2, wherein said phase change ink composition has an elevated operating temperature of at least about 120°C and a viscosity of not more than about $3 \times 10^{-2}$ Pa.s (about 30 centipoise).

4. A process as claimed in any one of Claims 1 to 3, wherein the temperature during the fixing of said phase change ink composition to said underlying substrate is from about 40 to about 80°C.

5. A process as claimed in any preceding claim, wherein said phase change ink composition is ductile at a temperature of about 10 to about 30°C.

6. A process as claimed in any preceding claim, wherein the phase change ink composition has a temperature range for the glassy region of E' from about -100 to about 40°C, the value of E' being from about $1.5 \times 10^8$ to about 1.5 to $10^{10}$ Pa (about $1.5 \times 10^9$ to about $1.5 \times 10^{11}$ dynes/cm$^2$).

7. A process as claimed in any preceding claim, wherein the phase change ink composition has a temperature range for the transition region of E' from about -50 to about 60°C.

8. A process as claimed in any preceding claim, wherein the phase change ink composition has a temperature range for the rubbery region of E' from about -10 to about 100°C, the value of E' being from about 1. $10^5$ Pa to about 1 x $10^{10}$ Pa (about $1.0 \times 10^6$ to about $1.0 \times 10^{11}$ dynes/cm$^2$).

9. A process as claimed in any preceding claim, wherein the phase change ink composition has a temperature range for the terminal region of E' from about 30 to about 160°C.

10. A process as claimed in any preceding claim, wherein the L* value of a substantially uniform thin film of about 1 x $10^{-5}$M (about 10 micron) thickness of a black color of a phase change ink composition produced from said phase change ink composition is not more than about 35.

11. A process as claimed in any preceding claim, wherein the L* value of a substantially uniform thin film of about 2 x $10^{-5}$M (about 20 micron) thickness of said phase change ink composition is at least about 65.

12. A process as claimed in any preceding claim, wherein thin films of uniform thickness of said phase change ink composition are rectilinearly light transmissive.

13. A process as claimed in any preceding claim, wherein the C*$_{ab}$ value of a substantially uniform thin film of about 1 x $10^{-5}$m (about 10 micron) thickness of a subtractive primary yellow color phase change ink composition produced from said phase change ink composition is at least about 40, that of a subtractive primary magenta color phase change ink composition produced from said phase change ink composition is at least about 65 and that of a subtractive primary cyan color modified phase change ink composition produced from said colorant composition is at least about 30.

14. A process as claimed in any preceding claim, wherein the glass transition temperature range of the phase change ink composition is from about -40 to about 40°C.

15. A process as claimed in any preceding claim, wherein the temperature range for the area under the tan $\delta$ peak of the phase change ink composition is from about -80 to about 80°C, with an integration area range from about 5 to about 40.

16. A process as claimed in any preceding claim, wherein the temperature range for the peak value of tan $\delta$ of the phase change ink is from about -40 to about 40°C with a tan $\delta$ of from about $1.0 \times 10^{-2}$ to about $1.0 \times 10$ at peak.

17. A process as claimed in any preceding claim wherein, under non-process conditions, prior to raising the temperature of said selective phase change ink composition to a first elevated operating temperature or subsequent to forming a printed substrate, the yield stress value (YS), according to the equation YS=mT+I , comprises a value as defined by m that is from about - 62.053 ± -13.790kPa (about -9 ± -2 psi)/ °C to about - 248.211 ± -13.790kPa (about -36 ± -2 psi)/ °C; T is from about 10 to about 60°C.; and I is from about 5.516 MPa ± 689.48kPa (about 800 ± 100 psi) to about 15.168 MPa ± 689.48kPa (about 2200 ± 100 psi).

18. A process as claimed in Claim 17 wherein m is about -206.843 ± 13.790kPa (about -30 ± -2 psi)/ °C and I is about 11.645MPa ± 689.48kPa (about 1700 ± 100 psi).

19. A process as claimed in any preceding claim wherein, under process conditions, from raising the temperature of said selective phase change ink composition to a first elevated operating temperature to forming a printed substrate, the yield stress value (YS), according to the equation YS = mT + I , comprises a value as defined by m is from about -41.368 ± -13.790kPa (about -6 ± -2 psi)/ °C to about -248.211 ± -13.790kPa (about -36 ± -2 psi)/ °C; T is from about 40 to about 80°C; and I is from about 5.516MPa ± 689.48kPa (about 800 ± 100 psi) to 1.103MPa ± 689.48kPa (1600 ± 100 psi).

20. A process as claimed in Claim 19 wherein m is about -62.053 ± -13.790kPa (about -9 ± -2 psi)/ °C and I is about 6.550MPa ± 689.48kPa (about 950 ± 100 psi).

21. A selective phase change ink composition comprising a phase change ink colorant composition and a modified phase change ink carrier composition, said selective phase change ink composition having (a) predetermined fluidic and mechanical properties which meet the parameters needed for application to an intermediate transfer surface at an elevated temperature in a liquid state and in a predetermined pattern, where it is transferred and fixed onto a substrate to form a printed substrate, (b) a compressive yield strength which will allow the ink to flow in a ductile manner when external compressive forces are applied thereto, and sufficient internal cohesive strength to resist failure when the ink is fixed to said substrate, (c) a high degree of ductility on said substrate after said transfer and fixing, and (d) a high degree of lightness and chroma for thin films of uniform thickness thereof.

22. A composition as claimed in Claim 21 wherein said phase change ink composition is ductile at a temperature of about 10 to about 30°C.

23. A composition as claimed in Claim 21 or Claim 22 wherein the phase change ink composition has a temperature range for the glassy region of E' from about -100 to about 40°C, the value of E' being from about $1.5 \times 10^8$ to about $1.5 \times 10^{10}$ Pa (about $1.5 \times 10^9$ to about $1.5 \times 10^{11}$ dynes/cm$^2$) at a desired testing frequency.

24. A composition as claimed in any one of Claims 21 to 23 wherein the phase change ink composition has a temperature range for the transition region of E' from about -50 to about 60°C.

25. A composition as claimed in any one of Claims 21 to 24 wherein the phase change ink composition has a temperature range for the rubbery region of E' from about -10 to about 100°C, the value of E' being from about $1.0 \times 10^5$ to about $1.0 \times 10^{10}$ Pa (about $1.0 \times 10^6$ to about $1.0 \times 10^{11}$ dynes/cm$^2$) at a desired testing frequency.

26. A composition as claimed in any one of Claim 21 to 25 wherein the phase change ink composition has a temperature range for the terminal region of E' from about 30 to about 160°C.

27. A composition as claimed in any one of Claims 21 to 26 wherein the L* value of a substantially uniform thin film of about $1 \times 10^{-5}$m (about 10 micron) thickness of a black color of a phase change ink composition produced from said phase change ink composition is not more than about 35.

28. A composition as claimed in any one of Claims 21 to 27 wherein the L* vlaue of a substantially uniform thin film of about $2 \times 10^{-5}$m (about 20 micron) thickness of said phase change ink composition is at least about 65.

29. A composition as claimed in any one of Claims 21 to 28 films of uniform thickness of said phase change ink composition are rectilinearly light transmissive.

30. A composition as claimed in any one of Claims 21 to 29 where the $C^*_{ab}$ value of a substantially uniform thin film of about $1 \times 10^{-5}$m (about 10 micron) thickness of a subtractive primary yellow color phase change ink composition produced from said phase change ink composition is at least about 40, that of a subtractive primary magenta color phase change ink composition produced from said phase change ink composition is at least about 65 and that of a subtractive primary cyan color modified phase change ink composition produced from said colorant composition is at least about 30.

31. A composition as claimed in any one of Claims 21 to 30 wherein the glass transition temperature range of the phase change ink composition is from about -40 to about 40°C.

32. A composition as claimed in anyone of Claims 21 to 31 wherein the temperature range for the area under the tan $\delta$ peak of the phase change ink composition is from about -80 to about 80°C, with an integration area range from about 5 to about 40.

33. A composition as claimed in any one of Claims 21 to 32 wherein the temperature range for the peak value of tan $\delta$ of the phase change ink is from about -40 to about 40°C with a tan $\delta$ of from about 1.0 X 10-2 to about 1.0 X 10 at peak.

34. A composition as claimed in any one of Claims 21 to 33 wherein, under non-process conditions, prior to raising the temperature of said selective phase change ink composition to a first elevated operating temperature or subsequent to forming a printed substrate, the yield stress value (YS), according to the equation YS = mT + I, comprises a value as defined by m that is from about - 62.053 $\pm$ -13.790kPa (about -9 $\pm$ -2 psi)/ °C to about - 248.211 $\pm$ - 13.790kPa (about -36 $\pm$ -2 psi)/ °C; T is from about 10 to about 60°C.; and I is from about 5.516 Mpa $\pm$ 689.48kPa (about 800 $\pm$ 100 psi) to about 15.168 Mpa $\pm$ 689.48kPa (about 2200 $\pm$ 100 psi).

35. A composition as claimed in Claim 34 wherein m is about -206.843 $\pm$ -13.790kPa (about -30 $\pm$ -2 psi)/ °C and I is about 11.645MPa $\pm$ 689.48kPa (about 1700 $\pm$ 100 psi).

36. A composition as claimed in any one of Claims 21 to 35 wherein, under process conditions, from raising the temperature of said selective phase change ink composition to a first elevated operating temperature to forming a printed substrate, the yield stress value (YS), according to the equation YS = mT + I, comprises a value as defined by m which is from about -41.368 $\pm$ -13.790kPa (about -6 $\pm$ -2 psi)/ °C to about -248.211 $\pm$ - 13.790kPa (about -36 $\pm$ -2 psi)/ °C; T is from about 40 to about 80°C; and I is from about 5.516MPa $\pm$ 689.48kPa (about 800 $\pm$ 100 psi) to 1.103MPa $\pm$ 689.48kPa (aout 1600 $\pm$ 100 psi).

37. A composition as claimed in Claim 36 wherein m is about -62.053 $\pm$ -13.790kPa (about -9 $\pm$ -2 psi)/ °C and I is about 6.550mpa $\pm$ 689.48kPa (about 950 $\pm$ 100 psi).

38. An ink composition suitable for use with an ink jet printhead comprising at least a colorant and an ink carrier composition, the ink composition being characterized by having a temperature range in the rubbery region of E' from about-10 to about 100°C, a value of E' of from about 1.0 x $10^6$ to about 1.0 x $10^{11}$ at a desired testing frequency and a glass transition temperature range temperature of from about -40 to about 40°C, where E' is determined by the equation of E' = $\sigma_o / \varepsilon_o$ (Cos$\delta$) .

39. An ink composition as claimed in Claim 38 wherein the ink carrier composition is selected one from the group consisting of a low viscosity semicrystalline or crystalline amide wax, an ester wax, a polyethylene wax, a microcrystalline wax, and paraffin in combination with a hydrocarbon or resin based amorphous material, or an oligomer, or a low molecular weight polymer or copolymer, or a tackifier, or a plasticizer and combinations thereof.

40. An ink composition as claimed in Claim 39 or Claim 40 wherein the colorant comprises a set of colorants in the primary process colors selected one from the group consisting of a dye and a pigment.

41. An ink composition as claimed in any one of Claims 38 to 40 wherein, under non-process conditions, prior to raising the temperature of said selective phase change ink composition to a first elevated operating temperature or subsequent to forming a printed substrate, the yield stress value (YS), according to the equation YS = mT + I, comprises a value as defined by m which is from about - 62.053 $\pm$ - 13.790kPa (about -9 $\pm$ -2 psi)/ °C to about -248.211 $\pm$ - 13.790kPa (about -36 $\pm$ -2 psi)/°C; T is from about 10 to about 60°C.; and I is from about 5.516 Mpa $\pm$ 689.48kPa (about 800 $\pm$ 100 psi) to about 15.168 Mpa $\pm$ 689.48kPa (about 2200 $\pm$ 100 psi).

42. An ink composition as claimed in any one of Claims 38 to 41 wherein, under process conditions, from raising the temperature of said selective phase change ink composition to a first elevated operating temperature to forming a printed substrate, the yield stress value (YS), according to the equation YS = mT + I, comprises a value as defined by m which is from about -41.368 $\pm$ -13.790kPa (about -6 $\pm$ -2 psi)/ °C to about -248.211 $\pm$ -13.790kPa (about -36 $\pm$ -2 psi)/ °C; T is from about 40 to about 80°C; and I is from about 5.516mpa $\pm$ 689.48kPa (about 800 $\pm$ 100 psi) to 1.103mpa $\pm$ 689.48kPa (about 1600 $\pm$ 100 psi).

43. A phase change ink composition comprising a colorant component and a carrier component, the two components in combination conferring phase change ink capability, the composition being a ductile solid rubbery material at a temperature in the range from about 10 °C to 30 °C, and a liquid of viscosity not more than 3 x $10^{-2}$ Pa.s (30 centipoises) at 120 °C.

**Patentansprüche**

1. Ein Verfahren zum indirekten Auftragen einer selektiven Phasenumwandlungstintenzusammsetzung auf ein Substrat, wobei das Verfahren umfaßt:

   a) das Vereinen einer Phasenumwandlungstinten-Farbmittelzusammensetzung und einer modifizierten Phasenumwandlungstinten-Trägerzusammensetzung, um eine selektive Phasenumwandlungstintenzusammensetzung mit vorbestimmten Fluid- und Mechanikeigenschaften zu erzeugen, welche die erforderlichen Parameter zur Auftragung davon erfüllen;

b) das Erhöhen der Temperatur dieser selektiven Phasenumwandlungstintenzusammensetzung auf eine erste, erhöhte Betriebstemperatur, um eine selektive Phasenumwandlungstintenzusammensetzung in flüssiger Phase zu bilden;

c) das Vorsehen einer Zwischenübertragungseinrichtung bei einer zweiten, erhöhten Betriebstemperatur zum indirekten Auftragen der selektiven Phasenumwandlungstintenzusammensetzung in einer flüssigen Phase auf das Substrat;

d) das Auftragen dieser selektiven Phasenumwandlungstintenzusammensetzung auf die Zwischenübertragungseinheit in einem vorbestimmten Muster und in einer flüssigen Phase;

e) das Erzeugen des vorbestimmten Musters der selektiven Phasenumwandlungstintenzusammensetzung in einer festen Phase auf der Zwischenübertragungseinrichtung bei einer zweiten erhöhten Betriebstemperatur;

f) das Übertragen der selektiven Phasenumwandlungstintenzusammensetzung von der Zwischenübertragungseinrichtung auf das Substrat; und

g) das Fixieren der selektiven Phasenumwandlungstintenzusammensetzung auf dem Substrat, um ein gedrucktes Substrat zu erzeugen, wobei die selektive Phasenumwandlungstintenzusammensetzung (1) eine Druck-Formänderungsfestigkeit, die es ermöglichen wird, auf Druck zu fließen, wenn Druckkräfte darauf bei der zweiten erhöhten Temperatur angewendet werden, und eine ausreichende innere Kohäsionsfestigkeit, um einem Fehler zu widerstehen, wenn die selektiven Phasenumwandlungstintenzusammensetzung auf dem Substrat fixiert wird, und (2) einen hohen Duktilitätsgrad auf dem Substrat nach dem Fixieren aufweist, wobei dünne Filme von im wesentlichen gleichförmiger Dicke der selektiven Phasenumwandlungstintenzusammensetzung einen hohen Helligkeits- und Farbsättigungsgrad aufweisen.

2. Ein Verfahren zum Drucken unter Verwendung einer Phasenumwandlungstintenzusammensetzung, wobei das Verfahren umfaßt:

a. das Vereinen einer Phasenumwandlungstinten-Farbmittelzusammensetzung und einer modifizierten Phasenumwandlungstinten-Trägerzusammensetzung, um eine selektive Phasenumwandlungstintenzusammensetzung mit vorbestimmten Fluid- und Mechanikeigenschaften zu erzeugen, welche die erforderlichen Parameter zur indirekten Auftragung davon erfüllen;

b) das Erhöhen der Temperatur dieser selektiven Phasenumwandlungstintenzusammensetzung auf eine erste, erhöhte Betriebstemperatur, um eine selektive Phasenumwandlungstintenzusammensetzung in flüssiger Phase zu bilden;

c) das Vorsehen einer Zwischenübertragungseinrichtung bei einer zweiten, erhöhten Betriebstemperatur, welche niedriger ist als die erste Betriebstemperatur, zur Aufnahme der selektiven Phasenumwandlungstintenzusammensetzung in flüssiger Phase;

d) das Auftragen der selektiven Phasenumwandlungstintenzusammensetzung in einer flüssigen Phase auf die Zwischenübertragungseinheit in einem vorbestimmten Muster;

e) das Abkühlen des vorbestimmten Musters der selektiven Phasenumwandlungstintenzusammensetzung auf eine verformbare feste Phase auf der Zwischenübertragungseinrichtung auf eine Temperatur, die niedriger als die zweite erhöhte Betriebstemperatur ist;

f) das Übertragen des vorbestimmten Musters der verformbaren selektiven Phasenumwandlungstintenzusammensetzung in fester Phase von der Zwischenübertragungseinrichtung auf das Substrat;

g) das Fixieren des vorbestimmten Musters der selektiven Phasenumwandlungstintenzusammensetzung in verformbarer fester Phase auf dem Substrat, um ein gedrucktes Substrat zu erzeugen, wobei die selektive Phasenumwandlungstintenzusammensetzung (1) eine Druck-Formänderungsfestigkeit, die es ermöglichen wird, in verformbarer Weise zu fließen, wenn Druckkräfte darauf angewendet werden, und eine ausreichende interne Kohäsionsfestigkeit aufweisen, um einem Fehler zu widerstehen, wenn die selektive Phasenumwandlungstintenzusammensetzung auf dem Substrat fixiert wird; und

h) das Abkühlen des vorbestimmten Musters der verformbaren festen Phasenumwandlungstintenzusammensetzung auf Raumtemperatur, so daß sie einen hohen Duktilitätsgrad auf dem Substrat nach dem Fixieren aufweist, wobei dünne Filme von gleichförmiger Dicke dieser auf Raumtemperatur abgekühlten selektiven Phasenumwandlungstinteuzusammensetzung einen hohen Helligkeits- und Farbsättigungsgrad aufweisen.

3. Verfahren nach Anspruch 1 oder 2, wobei die Phasenumwandlungstintenzusammensetzung eine erhöhte Betriebstemperatur von wenigstens etwa 120°C und eine Viskosität von nicht mehr als etwa $3 \times 10^{-2}$ Pa.s (etwa 30 Centipois) aufweist.

4. Verfahren nach jedem der Ansprüche 1 bis 3, worin die Temperatur während dem Fixieren der Phasenumwandlungstintenzusammensetzung auf das darunterliegende Substrat etwa 40 bis etwa 80°C beträgt.

5. Verfahren nach jedem der vorhergehenden Ansprüche, worin die Phasenumwandlungstintenzusammensetzung bei einer Temperatur von etwa 10 bis etwa 30°C duktil ist.

6. Verfahren nach jedem der vorhergehenden Ansprüche, worin die Phasenumwandlungstintenzusammensetzung für den Glasbereich von E' einen Temperaturbereich von etwa -100 bis 40°C aufweist, wobei der Wert E' von etwa $1,5 \times 10^8$ bis etwa $1,5 \times 10^{10}$ Pa (etwa $1,5 \times 10^9$ bis etwa $1,5 \times 10^{11}$ Dyn/cm$^2$) beträgt.

7. Verfahren nach jedem der vorhergehenden Ansprüche, worin die Phasenumwandlungstintenzusammensetzung für den Übergangsbereich von E' einen Temperaturbereich von etwa -50 bis etwa 60°C aufweist.

8. Verfahren nach jedem der vorhergehenden Ansprüche, worin die Phasenumwandlungstintenzusammensetzung für den gummiartigen Bereich von E' einen Temperaturbereich von etwa -10 bis etwa 100°C aufweist, wobei der Wert von E' von etwa $1,10^5$ Pa bis $1 \times 10^{10}$ Pa (etwa $1,0 \times 10^6$ bis etwa $1,0 \times 10^{11}$ Dyn/cm$^2$) aufweist.

9. Verfahren nach jedem der vorhergehenden Ansprüche, worin die Phasenumwandlungstintenzusammensetzung für den Endbereich von E' einen Temperaturbereich von etwa 30 bis etwa 160°C aufweist.

10. Verfahren nach jedem der vorhergehenden Ansprüche, worin der L*-Wert eines im wesentlichen gleichförmigen dünnen Filmes von etwa $1 \times 10^{-5}$ M (etwa 10 μm) Dicke einer schwarzen Farbe einer Phasenumwandlungstintenzusammensetzung, die aus der Phasenumwandlungstintenzusammensetzung erzeugt wird, nicht mehr als etwa 35 beträgt.

11. Verfahren nach jedem der vorhergehenden Ansprüche, worin der L*-Wert eines im wesentlichen gleichförmig dünnen Filmes von etwa $2 \times 10^{-5}$ M (etwa 20 μm) Dicke der Phasenumwandlungstintenzusammensetzung wenigstens etwa 65 beträgt.

12. Verfahren nach jedem der vorhergehenden Ansprüche, worin die dünnen Filme gleichförmiger Dicke der Phasenumwandlungstintenzusammensetzung geradlinig spezifisch lichtdurchlässig sind.

13. Verfahren nach jedem der vorhergehenden Ansprüche, worin der C*$_{ab}$-Wert eines im wesentlichen gleichförmig dünnen Filmes von etwa $1 \times 10^{-5}$ m (etwa 10 μm) Dicke einer Phasenumwandlungstintenzusammensetzung subtraktiver, primärer, gelber Farbe, die aus der Phasenumwandlungstintenzusammensetzung erzeugt ist, wenigstens etwa 40 beträgt, die einer Phasenumwandlungstintenzusammensetzung subtraktiver, primärer, Magentafarbe, welche aus der Phasenumwandlungstintenzusammensetzung erzeugt ist, wenigstens etwa 65 beträgt und die einer Phasenumwandlungstintenzusammensetzung subtraktiver, primärer Cyanfarbe, welche aus der Farbmittelzusammensetzung erzeugt ist, wenigstens etwa 30 beträgt.

14. Verfahren nach jedem der vorhergehenden Ansprüche, worin der Glasübergangstemperaturbereich der Phasenumwandlungstintenzusammensetzung zwischen etwa -40 bis etwa 40°C liegt.

15. Verfahren nach jedem der vorhergehenden Ansprüche, worin der Temperaturbereich für den Bereich unter dem tan δ-Peak der Phasenumwandlungstintenzusammensetzung zwischen etwa -80 bis etwa 80°C, mit einem Integrationsflächenbereich von etwa 5 bis etwa 40, liegt.

16. Verfahren nach jedem der vorhergehenden Ansprüche, worin der Temperaturbereich für den Peak-Wert von tan δ der Phasenumwandlungstintenzusammensetzung von etwa -40 bis etwa 40°C mit einem tan δ von etwa $1,0 \times 10^{-2}$ bis etwa $1,0 \times 10$ beim Peak, beträgt.

EP 0 604 023 B1

**17.** Verfahren nach jedem der vorhergehenden Ansprüche, worin unter Nicht-Verfahrensbedingungen vor dem Erhöhen der Temperatur der selektiven Phasenumwandlungstintenzusammensetzung auf eine erste erhöhte Betriebstemperatur oder nach dem Erzeugen eines gedruckten Substrates der Deckkraft-Beanspruchungswert (YS) gemäß der Gleichung YS = mT + I einen durch n definierten Wert umfaßt, der von etwa -62,053 ± 13,790 kPa (etwa -9 ± -2 psi)/°C bis etwa -248,211 ± -13,790 kPa (etwa -36 ± -2 psi)/°C beträgt, T zwischen etwa 10 bis etwa 60°C liegt und I zwischen etwa 5,516 MPa ± 689,48 kPa (etwa 800 ± 100 psi) bis etwa 15,168 MPa ± 689,48 kPa (etwa 2200 ± 100 psi) liegt.

**18.** Verfahren nach Anspruch 17, worin n etwa -206,843 ± -13,790 kPa (etwa -30 ± -2 psi)/°C und I etwa 11,645 MPa ± 689,48 kPa (etwa 1.700 ± 100 psi) beträgt.

**19.** Verfahren nach jedem der vorhergehenden Ansprüche, unter Verfahrensbedingungen von der Erhöhung der Temperatur der selektiven Phasenumwandlungstintenzusammensetzung auf eine erste erhöhte Betriebstemperatur zum Erzeugen eines gedruckten Substrates der Deckkraft-Beanspruchungswert (YS), gemäß der Gleichung YS = mT + I einen durch m definierten Wert umfaßt, der zwischen -41,368 ± -13,790 kPa (etwa -6 ± -2 psi)/°C bis etwa -248,211 ± -13,790 kPa (etwa -36 ± 2 psi)/°C beträgt, T zwischen etwa 40 bis etwa 80°C liegt und I etwa 5,516 MPa ± 689,48 kPa (etwa 800 ± 100 psi) bis 1,103 MPa ± 689,48 kPa (etwa 1600 ± 100 psi) beträgt.

**20.** Verfahren nach Anspruch 19, worin m etwa -62,053 ± -13,790 kPa (etwa -9 ± -2 psi)/°C und I etwa 6,550 MPa ± 689,48 kPa (etwa 950 ± 100 psi) beträgt.

**21.** Eine selektive Phasenumwandlungstintezusammensetzung, umfassend eine Phasenumwandlungstinte-Farbmittelzusammensetzung und eine modifizierte Phasenumwandlungstinte-Trägerzusammensetzung, wobei die selektive Phasenumwandlungstintenzusammensetzung (a) vorbestimmte Fluid- und Mechanikeigenschaften, welche die erforderlichen Parameter zum Auftragen auf eine Zwischenübertragungsoberfläche bei einer erhöhten Temperatur in einem flüssigen Zustand und in einem vorbestimmten Muster erfüllt, bei der sie auf ein Substrat übertragen und fixiert wird, um ein gedrucktes Substrat zu erzeugen, (b) eine DruckFormänderungsfestigkeit, welche es der Tinte ermöglicht, in duktiler Weise zu fließen, wenn äußere Druckkräfte darauf angewendet werden, und eine ausreichende interne Kohäsionsfestigkeit, um einem Fehler zu widerstehen, wenn die Tinte auf dem Substrat fixiert wird, (c) einen hohen Duktilitätsgrad auf dem Substrat nach dem Übertragen und Fixieren und (d) einen hohen Helligkeits- und Farbsättigungsgrad für dünne Filme gleichförmiger Dicke davon, aufweist.

**22.** Zusammensetzung nach Anspruch 21, worin die Phasenumwandlungstintenzusammensetzung bei einer Temperatur von etwa 10 bis etwa 30°C duktil ist.

**23.** Zusammensetzung nach Anspruch 21 oder 22, worin die Phasenumwandlungstintenzusammensetzung für den Glasbereich von E' einen Temperaturbereich von etwa -100 bis etwa 40°C aufweist, wobei der Wert E' von etwa 1,5 x $10^8$ bis etwa 1,5 x $10^{10}$ Pa (etwa 1,5 x $10^9$ bis etwa 1,5 x $10^{11}$ Dyn/cm$^2$) bei einer gewünschten Versuchshäufigkeit aufweist.

**24.** Zusammensetzung nach jedem der Ansprüche 21 bis 23, worin die Phasenumwandlungstintenzusammensetzung für den Übergangsbereich von E' einen Temperaturbereich von etwa -50 bis -60°C aufweist.

**25.** Zusammensetzung nach jedem der Ansprüche 21 bis 24, worin die Phasenumwandlungstintenzusammensetzung für den Gummibereich von E' einen Temperaturbereich von etwa -10 bis 100°C aufweist, wobei der Wert E' von etwa 1,0 x $10^5$ bis etwa 1,0 x $10^{10}$ Pa (etwa 1,0 x $10^6$ bis etwa 1,0 x $10^{11}$ Dyn/cm$^2$) bei einer gewünschten Versuchshäufigkeit beträgt.

**26.** Zusammensetzung nach jedem der Ansprüche 21 bis 25, worin die Phasenumwandlungstintenzusammensetzung für den Endbereich von E' einen Temperaturbereich von etwa 30 bis 160°C aufweist.

**27.** Zusammensetzung nach jedem der Ansprüche 21 bis 26, worin der L*-Wert eines im wesentlichen gleichförmigen dicken Filmes von etwa 1 x $10^{-5}$ m (etwa 10 μm) Dicke einer schwarzen Farbe einer Phasenumwandlungstintenzusammensetzung, welche aus der Phasenumwandlungstintenzusammensetzung erzeugt ist, nicht mehr als 35 beträgt.

**28.** Zusammensetzung nach jedem der Ansprüche 21 bis 27, worin der L*-Wert eines im wesentlichen gleichförmig dünnen Filmes von etwa 2 x $10^{-5}$ m (etwa 20 μm) Dicke der Phasenumwandlungstintenzusammensetzung wenigstens etwa 65 beträgt.

**29.** Zusammensetzung nach jedem der Ansprüche 21 bis 28, worin die Filme gleichförmiger Dicke der Phasenumwandlungstintenzusammensetzung geradlinig spezifisch lichtdurchlässig sind.

**30.** Zusammensetzung nach jedem der Ansprüche 21 bis 29, worin der $C^*_{ab}$-Wert eines im wesentlichen gleichförmig dünnen Filmes von etwa $10 \times 10^{-5}$ m (etwa 10 $\mu$m) Dicke einer Phasenumwandlungstintenzusammensetzung substraktiver, primärer, gelber Farbe, welche aus der Phasenumwandlungstintenzusammensetzung erzeugt ist, wenigstens etwa 40 beträgt, die einer Phasenumwandlungstintenzusammensetzung subtraktiver, primärer, Magentafarbe, welche aus der Phasenumwandlungstintenzusammensetzung erzeugt ist, wenigstens etwa 65 beträgt und die einer Phasenumwandlungstintenzusammensetzung subtraktiver, primärer Cyanfarbe, welche aus der Farbmittelzusammensetzung erzeugt ist, wenigstens etwa 30 beträgt.

**31.** Zusammensetzung nach jedem der Ansprüche 21 bis 30, worin der Glasübergangstemperaturbereich der Phasenumwandlungstintenzusammensetzung zwischen etwa -40 bis etwa 40°C liegt.

**32.** Zusammensetzung nach jedem der Ansprüche 21 bis 31, worin der Temperaturbereich für die Fläche unter dem tan $\delta$-Peak der Phasenumwandlungstintenzusammensetzung zwischen etwa -80 bis etwa 80°C, mit einem Integrationsflächenbereich von etwa 5 bis etwa 40, liegt.

**33.** Zusammensetzung nach jedem der Ansprüche 21 bis 32, worin der Temperaturbereich für den Peak-Wert von tan $\delta$ der Phasenumwandlungstintenzusammensetzung von etwa -40 bis etwa 40°C, mit einem tan $\delta$ von etwa $1,0 \times 10^{-2}$ bis etwa $1,0 \times 10$ beim Peak, liegt.

**34.** Zusammensetzung nach jedem der Ansprüche 21 bis 33, worin unter Nicht-Verfahrensbedingungen, vor dem Erhöhen der Temperatur der selektiven Phasenumwandlungstintenzusammensetzung auf eine erste erhöhte Betriebstemperatur oder nach dem Erzeugen eines gedruckten Substrates der Deckkraft-Beanspruchungswert (YS) gemäß der Gleichung YS = mT + I einen durch m definierten Wert umfaßt, der von etwa -62,053 ± -13,790 kPa (etwa -9 ± -2 psi)/°C bis etwa -248,211 ± -13,790 kPa (etwa -36 ± -2 psi)/°C beträgt, T zwischen etwa 10 bis etwa 60°C liegt und I zwischen etwa 5,516 MPa ± 689,48 kPa (etwa 800 ± 100 psi) bis etwa 15,168 MPa ± 689,48 kPa (etwa 2200 ± 100 psi) liegt.

**35.** Zusammensetzung nach Anspruch 34, worin m etwa -206,843 ± -13,790 kPa (etwa -30 ± -2 psi)/°C und I etwa 11,645 MPa ± 689,48 kPa (etwa 1.700 ± 100 psi) beträgt.

**36.** Zusammensetzung nach jedem der Ansprüche 21 bis 35, worin unter Verfahrensbedingungen von der Erhöhung der Temperatur der selektiven Phasenumwandlungstintenzusammensetzung auf eine erste erhöhte Betriebstemperatur zum Erzeugen eines gedruckten Substrates der Deckkraft-Beanspruchungswert (YS), gemäß der Gleichung YS = mT + I einen durch m definierten Wert umfaßt, der zwischen -41,368 ± -13,790 kPa (etwa -6 ± -2 psi)/°C bis etwa -248,211 ± -13,790 kPa (etwa -36 ± 2 psi)/°C beträgt, T zwischen etwa 40 bis etwa 80°C liegt und I etwa 5,561 MPa ± 689,48 kPa (etwa 800 ± 100 psi) bis 1,103 MPa ± 689,48 kPa (etwa 1600 ± 100 psi) beträgt.

**37.** Zusammensetzung nach Anspruch 36, worin m etwa -62,053 ± -13,790 kPa (etwa -9 ± -2 psi)/°C und I etwa 6,550 MPa ± 689,48 kPa (etwa 950 ± 100 psi) beträgt.

**38.** Eine Tintenzusammensetzung zur Verwendung mit einem Tintenstrahldruckkopf, umfassend wenigstens ein Farbmittel und eine Tintenträgerzusammensetzung, wobei die Tintenzusammensetzung durch einen Temperaturbereich im Gummibereich von E' von etwa 10 bis 100°C, einen Wert von E' von $1,0 \times 10^6$ bis $1,0 \times 10^{11}$ bei einer gewünschten Versuchshäufigkeit und einen Glasübergangstemperaturbereich von etwa -40 bis etwa 40°C gekennzeichnet ist, wobei E' durch die Gleichung $E' = \sigma_O / \varepsilon_O (\cos\delta)$ bestimmt ist.

**39.** Tintenzusammensetzung nach Anspruch 38, worin die Tintenträgerzusammensetzung aus der Gruppe ausgewählt ist, welche aus halbkristallinen oder kristallinen Amidwachsen niedriger Viskosität, einem Esterwachs, einem Polyethylenwachs, einem mikrokristallinen Wachs und Paraffin in Verbindung mit einem amorphen Material auf Kohlenwasserstoff- oder Harzbasis oder einem Oligomer oder einem Polymer oder Copolymer mit niedrigem Molekulargewicht oder einem Klebrigmacher oder einem Plastifizierer und Kombinationen davon ausgewählt ist.

**40.** Tintenzusammensetzung nach Anspruch 39 oder 40, worin das Farbmittel in den primären Verfahrensfarben einen Satz von Farbmitteln umfaßt, die aus einer aus einem Farbstoff und einem Pigment bestehenden Gruppe ausgewählt sind.

**41.** Tintenzusammensetzung nach jedem der Ansprüche 38 bis 40, worin unter Nicht-Verfahrensbedingungen vor dem Erhöhen der Temperatur der selektiven Phasenumwandlungstintenzusammensetzung auf eine erste erhöhte Betriebstemperatur oder nach dem Erzeugen eines gedruckten Substrates der Deckkraft-Beanspruchungswert (YS) gemäß der Gleichung YS = mT + I einen durch n definierten Wert umfaßt, der von etwa -62,053 ± 13,790 kPa (etwa -9 ± -2 psi)/°C bis etwa -248,211 ± -13,790 kPa (etwa -36 + -2 psi)/°C beträgt, T zwischen etwa 10 bis etwa 60°C liegt und I zwischen etwa 5,516 MPa ± 689,48 kPa (etwa 800 ± 100 psi) bis etwa 15,168 MPa ± 689,48 kPa (etwa 2200 ± 100 psi) liegt.

**42.** Tintenzusammensetzung nach jedem der Ansprüche 38 bis 41, worin unter Verfahrensbedingungen vor dem Erhöhen der Temperatur der selektiven Phasenumwandlungstintenzusammensetzung auf eine erste erhöhte Betriebstemperatur zum Erzeugen eines gedruckten Substrates, der Deckkraft-Beanspruchungswert (YS) gemäß der Gleichung YS = mT + I einen durch m definierten Wert umfaßt, der von etwa -41,368 ± -13,790 kPa (etwa -6 ± -2 psi)/°C bis etwa -248,211 ± -13,790 kPa (etwa -36 ± -2 psi)/°C beträgt, T zwischen etwa 40 bis etwa 80°C liegt und I von etwa 5,516 MPa ± 689,48 kPa (etwa 800 ± 100 psi) bis etwa 1,103 MPa ± 689,48 kPa (etwa 1600 ± 100 psi)liegt.

**43.** Phasenumwandlungstintenzusammensetzung, umfassend einen Farbmittelbestandteil und einen Trägerbestandteil, wobei die zwei Komponenten in Kombination eine Phasenumwandlungstintenfähigkeit verleihen und die Zusammensetzung ein duktiles, festes gummiartiges Material bei einer Temperatur im Bereich von etwa 10°C bis 30°C und eine Flüssigkeit einer Viskosität von nicht mehr als 3 x 10$^{-2}$ Pa.s (30 Centipois) bei 120°C ist.

**Revendications**

**1.** Un procédé pour appliquer indirectement à un substrat une composition d'encre à changement sélectif de phase, lequel procédé comprend :

a. l'association d'une composition de colorant d'encre à changement de phase et d'une composition modifiée de véhicule d'encre à changement de phase pour produire ladite composition d'encre à changement sélectif de phase ayant des propriétés fluidiques et mécaniques prédéterminées qui répondent aux paramètres requis pour son application indirecte ;

b. l'élévation de la température de ladite composition d'encre à changement sélectif de phase à une première température de travail élevée pour former une composition d'encre à changement sélectif de phase en phase liquide ;

c. la fourniture d'un moyen de transfert intermédiaire à une seconde température de travail élevée pour appliquer indirectement ladite composition d'encre à changement sélectif de phase en phase liquide audit substrat ;

d. l'application de ladite composition d'encre à changement sélectif de phase audit moyen de transfert intermédiaire sous une forme prédéterminée et en phase liquide ;

e. la transformation de ladite forme prédéterminée de ladite composition d'encre à changement sélectif de phase en une phase solide sur le moyen de transfert intermédiaire à une seconde température de travail élevée ;

f. le transfert de ladite composition d'encre à changement sélectif de phase dudit moyen de transfert intermédiaire audit substrat ; et

g. la fixation audit substrat de ladite composition d'encre à changement sélectif de phase pour former un substrat imprimé, ladite composition d'encre à changement sélectif de phase ayant (1) une limite d'écoulement à la compression qui lui permet de s'écouler d'une manière malléable lorsque des forces de compression lui sont appliquées à la seconde température élevée, et un pouvoir de cohésion interne suffisant pour résister à une rupture, lorsque ladite composition d'encre à changement sélectif de phase est fixée audit substrat, et (2) un haut degré de ductilité sur ledit substrat après ladite fixation, des couches minces d'épaisseur sensiblement uniforme de ladite composition d'encre à changement sélectif de phase ayant un haut degré de clarté et de saturation de couleur.

**2.** Un procédé d'impression utilisant une composition d'encre à changement de phase, lequel procédé comprend :

a. l'association d'une composition de colorant d'encre à changement de phase et d'une composition modifiée de véhicule d'encre à changement de phase pour produire une composition d'encre à changement sélectif de phase ayant des propriétés fluidiques et mécaniques prédéterminées qui répondent aux paramètres requis pour son application indirecte ;

b. l'élévation de la température de ladite composition d'encre à changement sélectif de phase à une première température de travail élevée pour former une composition d'encre à changement sélectif de phase en phase liquide ;

c. la fourniture d'un moyen de transfert intermédiaire à une seconde température de travail élevée inférieure à la première température de travail pour recevoir ladite composition à changement sélectif de phase en phase liquide ;

d. l'application de ladite composition d'encre à changement sélectif de phase en phase liquide audit moyen de transfert intermédiaire sous une forme prédéterminée ;

e. le refroidissement de ladite forme prédéterminée de ladite composition d'encre à changement sélectif de phase en une phase solide malléable sur le moyen de transfert intermédiaire jusqu'à une température inférieure à la seconde température de travail élevée ;

f. le transfert de ladite forme prédéterminée de ladite composition d'encre à changement sélectif de phase en phase solide malléable dudit moyen de transfert intermédiaire audit substrat ;

g. la fixation audit substrat de ladite forme prédéterminée de ladite composition d'encre à changement sélectif de phase en phase solide malléable pour former un substrat imprimé, ladite composition d'encre à changement sélectif de phase ayant une limite d'écoulement à la compression qui lui permet de s'écouler d'une manière malléable lorsque des forces de compression lui sont appliquées et ayant un pouvoir de cohésion interne suffisant pour résister à une rupture lorsque ladite composition d'encre à changement sélectif de phase est fixée audit substrat ; et

h. le refroidissement de la forme prédéterminée de ladite composition d'encre à changement de phase solide malléable jusqu'à la température ambiante de sorte qu'elle possède un haut degré de ductilité sur ledit substrat après ladite fixation, des couches minces d'épaisseur uniforme de ladite composition d'encre à changement sélectif de phase refroidie à la température ambiante ayant un haut degré de clarté et de saturation de couleur.

3. Un procédé tel que revendiqué dans la revendication 1 ou la revendication 2, dans lequel ladite composition d'encre à changement de phase a une température de travail élevée d'au moins environ 120°C et une viscosité ne dépassant pas environ $3 \times 10^{-2}$ Pa.s (environ 30 centipoises).

4. Un procédé tel que revendiqué dans l'une quelconque des revendications 1 à 3, dans lequel la température au cours de la fixation de ladite composition d'encre à changement de phase audit substrat sous-jacent est d'environ 40 à environ 80°C.

5. Un procédé tel que revendiqué dans l'une quelconque des revendications précédentes, dans lequel ladite composition d'encre à changement de phase est ductile à une température d'environ 10 à environ 30°C.

6. Un procédé tel que revendiqué dans l'une quelconque des revendications précédentes, dans lequel la composition d'encre à changement de phase présente un intervalle de température pour la région vitreuse de E' d'environ -100 à environ 40°C, la valeur de E' étant d'environ $1,5 \times 10^8$ à environ $1,5 \times 10^{10}$ Pa (environ $1,5 \times 10^9$ à environ $1,5 \times 10^{11}$ dynes/cm$^2$).

7. Un procédé tel que revendiqué dans l'une quelconque des revendications précédentes, dans lequel la composition d'encre à changement de phase présente un intervalle de température pour la région de transition de E' d'environ -50 à environ 60°C.

8. Un procédé tel que revendiqué dans l'une quelconque des revendications précédentes, dans lequel la composition d'encre à changement de phase présente un intervalle de température pour la région caoutchouteuse de E' d'environ -10 à environ 100°C, la valeur de E' étant d'environ $1 \times 10^5$ à environ $1 \times 10^{10}$ Pa (environ $1,0 \times 10^6$ à environ $1,0 \times 10^{11}$ dynes/cm$^2$).

9. Un procédé tel que revendiqué dans l'une quelconque des revendications précédentes, dans lequel la composition d'encre à changement de phase présente un intervalle de température pour la région terminale de E' d'environ 30 à environ 160°C.

10. Un procédé tel que revendiqué dans l'une quelconque des revendications précédentes, dans lequel la valeur L* d'une couche mince sensiblement uniforme d'environ $1 \times 10^{-5}$ m (environ 10 micromètres) d'épaisseur d'une couleur noire d'une composition d'encre à changement de phase produite à partir de ladite composition d'encre à changement de phase n'est pas supérieure à environ 35.

11. Un procédé tel que revendiqué dans l'une quelconque des revendications précédentes, dans lequel la valeur L* d'une couche mince sensiblement uniforme d'environ $2 \times 10^{-5}$ m (environ 20 micromètres) d'épaisseur de ladite composition d'encre à changement de phase est d'au moins environ 65.

28

**12.** Un procédé tel que revendiqué dans l'une quelconque des revendications précédentes, dans lequel des couches minces d'épaisseur uniforme de ladite composition d'encre à changement de phase transmettent la lumière de façon rectilinéaire.

**13.** Un procédé tel que revendiqué dans l'une quelconque des revendications précédentes, dans lequel la valeur $C^{*}_{ab}$ d'une couche mince sensiblement uniforme d'environ $1 \times 10^{-5}$ m (environ 10 micromètres) d'épaisseur d'une composition d'encre à changement de phase de couleur jaune primaire soustractive produite à partir de ladite composition d'encre à changement de phase est d'au moins environ 40, celle d'une composition d'encre à changement de phase de couleur magenta primaire soustractive produite à partir de ladite composition d'encre à changement de phase est d'au moins environ 65 et celle d'une composition d'encre à changement de phase modifiée de couleur cyan primaire soustractive produite à partir de ladite composition de colorant est d'au moins d'environ 30.

**14.** Un procédé tel que revendiqué dans l'une quelconque des revendications précédentes, dans lequel l'intervalle de température de transition vitreuse de la composition d'encre à changement de phase est d'environ -40 à environ 40°C.

**15.** Un procédé tel que revendiqué dans l'une quelconque des revendications précédentes, dans lequel l'intervalle de température pour l'aire sous le pic de tg $\delta$ de la composition d'encre à changement de phase est d'environ -80 à environ 80°C, avec un intervalle d'aire d'intégration d'environ 5 à environ 40.

**16.** Un procédé tel que revendiqué dans l'une quelconque des revendications précédentes, dans lequel l'intervalle de température pour le maximum du pic de tg $\delta$ de l'encre à changement de phase est d'environ -40 à environ 40°C, avec une tg $\delta$ d'environ $1,0 \times 10^{-2}$ à environ $1,0 \times 10$ au maximum du pic.

**17.** Un procédé tel que revendiqué dans l'une quelconque des revendications précédentes dans lequel, dans des conditions non opératoires, avant l'élévation de la température de ladite composition d'encre à changement sélectif de phase à une première température de travail élevée ou après formation d'un substrat imprimé, le seuil d'écoulement (SE), selon l'équation $SE = mT + l$, comprend une valeur telle que définie par m qui est d'environ -62,053 ± -13,790 kPa (environ -9 ± -2 psi)/°C à environ -248,211 ± -13,790 kPa (environ -36 ± -2 psi)/°C ; T qui est d'environ 10 à environ 60°C ; et l qui est d'environ 5,516 MPa ± 689,48 kPa (environ 800 ± 100 psi) à environ 15,168 MPa ± 689,48 kPa (environ 2200 ± 100 psi).

**18.** Un procédé tel que revendiqué dans la revendication 17, dans lequel m est d'environ -206,843 ± -13,790 kPa (environ -30 ± -2 psi)/°C et l est d'environ 11,645 MPa ± 689,48 kPa (environ 1700 ± 100 psi).

**19.** Un procédé tel que revendiqué dans l'une quelconque des revendications précédentes, dans lequel, dans les conditions opératoires, depuis l'élévation de la température de ladite composition d'encre à changement sélectif de phase à une première température de travail élevée jusqu'à la formation d'un substrat imprimé, le seuil d'écoulement (SE), selon l'équation $SE = mT + l$, comprend une valeur telle que définie par m qui est d'environ -41,368 ± -13,790 kPa (environ -6 ± -2 psi)/°C à environ -248,211 ± -13,790 kPa (environ -36 ± -2 psi)/°C ; T qui est d'environ 40 à environ 80°C ; et l qui est d'environ 5,516 MPa ± 689,48 kPa (environ 800 ± 100 psi) à 1,103 MPa ± 689,48 kPa (1600 ± 100 psi).

**20.** Un procédé tel que revendiqué dans la revendication 19, dans lequel m est d'environ -62,053 ± -13,790 kPa (environ -9 ± -2 psi)/°C et l est d'environ 6,550 MPa ± 689,48 kPa (environ 950 ± 100 psi).

**21.** Une composition d'encre à changement sélectif de phase comprenant une composition de colorant d'encre à changement de phase et une composition modifiée de véhicule d'encre à changement de phase, ladite composition d'encre à changement sélectif de phase ayant (a) des propriétés fluidiques et mécaniques prédéterminées qui répondent aux paramètres requis pour l'application à une surface de transfert intermédiaire à une température élevée dans un état liquide et sous une forme prédéterminée, où elle est transférée et fixée sur un substrat pour former un substrat imprimé, (b) une limite d'écoulement à la compression qui permet à l'encre de s'écouler d'une manière ductile lorsque des forces de compression externes lui sont appliquées, et un pouvoir de cohésion interne suffisant pour résister à une rupture lorsque l'encre est fixée audit substrat, (c) un haut degré de ductilité sur ledit substrat après ledit transfert et ladite fixation, et (d) un haut degré de clarté et de saturation de couleur pour des couches minces d'épaisseur uniforme qui en sont constituées.

**22.** Une composition telle que revendiquée dans la revendication 21, dans laquelle ladite composition d'encre à changement de phase est ductile à une température d'environ 10 à environ 30°C.

**23.** Une composition telle que revendiquée dans la revendication 21 ou la revendication 22, dans laquelle la composition d'encre à changement de phase présente un intervalle de température pour la région vitreuse de E' d'environ -100 à environ 40°C, la valeur de E' étant d'environ $1,5 \times 10^8$ à environ $1,5 \times 10^{10}$ Pa (environ $1,5 \times 10^9$ à environ $1,5 \times 10^{11}$ dynes/cm$^2$) à une fréquence d'essai désirée.

**24.** Une composition telle que revendiquée dans l'une quelconque des revendications 21 à 23, dans laquelle la composition d'encre à changement de phase présente un intervalle de température pour la région de transition de E' d'environ -50 à environ 60°C.

**25.** Une composition telle que revendiquée dans l'une quelconque des revendications 21 à 24, dans laquelle la composition d'encre à changement de phase présente un intervalle de température pour la région caoutchouteuse de E' d'environ -10 à environ 100°C, la valeur de E' étant d'environ $1,0 \times 10^5$ à environ $1,0 \times 10^{10}$ Pa (environ $1,0 \times 10^6$ à environ $1,0 \times 10^{11}$ dynes/cm$^2$) à une fréquence d'essai désirée.

**26.** Une composition telle que revendiquée dans l'une quelconque des revendications 21 à 25, dans laquelle la composition d'encre à changement de phase présente un intervalle de température pour la région terminale de E' d'environ 30 à environ 160°C.

**27.** Une composition telle que revendiquée dans l'une quelconque des revendications 21 à 26, dans laquelle la valeur L* d'une couche mince sensiblement uniforme d'environ $1 \times 10^{-5}$ m (environ 10 micromètres) d'épaisseur de couleur noire d'une composition d'encre à changement de phase produite à partir de ladite composition d'encre à changement de phase n'est pas supérieure à environ 35.

**28.** Une composition telle que revendiquée dans l'une quelconque des revendications 21 à 27, dans laquelle la valeur L* d'une couche mince sensiblement uniforme d'environ $2 \times 10^{-5}$ m (environ 20 micromètres) d'épaisseur de ladite composition d'encre à changement de phase est d'au moins environ 65.

**29.** Une composition telle que revendiquée dans l'une quelconque des revendications 21 à 28, dans laquelle des couches minces d'épaisseur uniforme de ladite composition d'encre à changement de phase transmettent la lumière de façon rectilinéaire.

**30.** Une composition telle que revendiquée dans l'une quelconque des revendications 21 à 29, dans laquelle la valeur C*$_{ab}$ d'une couche mince sensiblement uniforme d'environ $1 \times 10^{-5}$ m (environ 10 micromètres) d'épaisseur d'une composition d'encre à changement de phase de couleur jaune primaire soustractive produite à partir de ladite composition d'encre à changement de phase est d'au moins environ 40, celle d'une composition d'encre à changement de phase de couleur magenta primaire soustractive produite à partir de ladite composition d'encre à changement de phase est d'au moins environ 65 et celle d'une composition d'encre à changement de phase modifiée de couleur cyan primaire soustractive produite à partir de ladite composition de colorant est d'au moins environ 30.

**31.** Une composition telle que revendiquée dans l'une quelconque des revendications 21 à 30, dans laquelle l'intervalle de température de transition vitreuse de la composition d'encre à changement de phase est d'environ -40 à environ 40°C.

**32.** Une composition telle que revendiquée dans l'une quelconque des revendications 21 à 31, dans laquelle l'intervalle de température pour l'aire sous le pic de tg $\delta$ de la composition d'encre à changement de phase est d'environ -80 à environ 80°C, avec un intervalle d'aire d'intégration d'environ 5 à environ 40.

**33.** Une composition telle que revendiquée dans l'une quelconque des revendications 21 à 32, dans laquelle l'intervalle de température pour le maximum du pic de tg $\delta$ de l'encre à changement de phase est d'environ -40 à environ 40°C, avec une tg $\delta$ d'environ $1,0 \times 10^{-2}$ à environ $1,0 \times 10$ au maximum du pic.

**34.** Une composition telle que revendiquée dans l'une quelconque des revendications 21 à 33, dans laquelle, dans des conditions non opératoires, avant l'élévation de la température de ladite composition d'encre à changement sélectif de phase à une première température de travail élevée ou après la formation d'un substrat imprimé, le seuil d'écoulement (SE), selon l'équation SE = mT + I, comprend une valeur telle que définie par m qui est d'environ -62,053 ± -13,790 kPa (environ -9 ± -2 psi)/°C à environ -248,211 ± -13,790 kPa (environ -36 ± -2 psi)/°C ; T qui est d'environ 10 à environ 60°C ; et I qui est d'environ 5,516 MPa ± 689,48 kPa (environ 800 ± 100 psi) à environ 15,168 MPa ± 689,48 kPa (environ 2200 ± 100 psi).

**35.** Une composition telle que revendiquée dans la revendication 34, dans laquelle m est d'environ -206,843 ± -13,790 kPa (environ -30 ± -2 psi)/°C et I est d'environ 11,645 MPa ± 689,48 kPa (environ 1700 ± 100 psi).

**36.** Une composition telle que revendiquée dans l'une quelconque des revendications 21 à 35, dans laquelle, dans les conditions opératoires, depuis l'élévation de la température de ladite composition d'encre à changement sélectif de phase à une première température de travail élevée jusqu'à la formation d'un substrat imprimé, le seuil d'écoulement (SE), selon l'équation SE = mT + I, comprend une valeur telle que définie par m qui est d'environ -41,368 ± -13,790 kPa (environ -6 ± -2 psi)/°C à environ -248,211 ± -13,790 kPa (environ -36 ± -2 psi)/°C ; T qui est d'environ 40 à environ 80°C ; et I qui est d'environ 5,516 MPa ± 689,48 kPa (environ 800 ± 100 psi) à 1,103 MPa ± 689,48 kPa (1600 ± 100 psi).

**37.** Une composition telle que revendiquée dans la revendication 36, dans laquelle m est d'environ -62,053 ± -13,790 kPa (environ -9 ± -2 psi)/°C et I est d'environ 6,550 MPa ± 689,48 kPa (environ 950 ± 100 psi).

**38.** Une composition d'encre utilisable avec une tête d'impression à jet d'encre, comprenant au moins un colorant et une composition de véhicule d'encre, la composition d'encre étant caractérisée en ce qu'elle présente un intervalle de température dans la région caoutchouteuse de E' d'environ 10 à environ 100°C, une valeur de E' d'environ 1,0 × $10^6$ à environ 1,0 × $10^{11}$ à une fréquence d'essai désirée et un intervalle de température de transition vitreuse d'environ -40 à environ 40°C, où E' est déterminé par l'équation E' = $\sigma_o/\varepsilon_o$ (cos$\delta$) .

**39.** Une composition d'encre telle que revendiquée dans la revendication 38, dans laquelle la composition de véhicule d'encre est choisie dans le groupe formé par une cire d'amide semi-cristalline ou cristalline à basse viscosité, une cire d'ester, une cire de polyéthylène, une cire microcristalline et une paraffine en association avec une matière amorphe à base d'hydrocarbure ou de résine, ou un oligomère, ou un polymère ou copolymère de bas poids moléculaire, ou un agent d'adhésivité, ou un plastifiant, et des associations d'entre eux.

**40.** Une composition d'encre telle que revendiquée dans la revendication 39 ou la revendication 40, dans laquelle le colorant comprend un système de colorants des couleurs primaires pour polychromie choisis chacun dans le groupe formé par un colorant soluble et un pigment.

**41.** Une composition d'encre telle que revendiquée dans l'une quelconque des revendications 38 à 40, dans laquelle, dans des conditions non opératoires, avant l'élévation de la température de ladite composition d'encre à changement sélectif de phase à une première température de travail élevée ou après la formation d'un substrat imprimé, le seuil d'écoulement (SE), selon l'équation SE = mT + I, comprend une valeur telle que définie par m qui est d'environ -62,053 ± -13,790 kPa (environ -9 ± -2 psi)/°C à environ -248,211 ± -13,790 kPa (environ -36 ± -2 psi)/°C ; T qui est d'environ 10 à environ 60°C ; et I qui est d'environ 5,516 MPa ± 689,48 kPa (environ 800 ± 100 psi) à environ 15,168 MPa ± 689,48 kPa (environ 2200 ± 100 psi).

**42.** Une composition d'encre telle que revendiquée dans l'une quelconque des revendications 38 à 41, dans laquelle, dans les conditions opératoires, depuis l'élévation de la température de ladite composition d'encre à changement sélectif de phase à une première température de travail élevée jusqu'à la formation d'un substrat imprimé, le seuil d'écoulement (SE), selon l'équation SE = mT + I, comprend une valeur telle que définie par m qui est d'environ -41,368 ± -13,790 kPa (environ -6 ± -2 psi)/°C à environ -248,211 ± -13,790 kPa (environ -36 ± -2 psi)/°C ; T qui est d'environ 40 à environ 80°C ; et I qui est d'environ 5,516 MPa ± 689,48 kPa (environ 800 ± 100 psi) à 1,103 MPa ± 689,48 kPa (environ 1600 ± 100 psi).

**43.** Une composition d'encre à changement de phase comprenant un composant colorant et un composant véhicule, les deux composants, en association, conférant une propriété d'encre à changement de phase, la composition étant une matière caoutchouteuse solide ductile à une température comprise dans l'intervalle d'environ 10°C à 30°C, et un liquide de viscosité non supérieure à 3 × $10^{-2}$ Pa.s (30 centipoises) à 120°C.

EP 0 604 023 B1

FIGURE 1: Temperature Profile of the Storage Modulus of Hot Melt Ink

FIGURE 2:   Temperature Profile of the Tangent Delta of Hot Melt Ink

EP 0 604 023 B1

# FIGURE 3: FORMULATION A

FIGURE 4:   FORMULATION B

EP 0 604 023 B1

FIGURE 5:  FORMULATION C

EP 0 604 023 B1

FIGURE 6: FORMULATION D

EP 0 604 023 B1

FIGURE 7: FORMULATION E

FIGURE 8: FOUMULATION F

FIGURE 9: YIELD STRESS AS A FUNCTION OF TEMPERATURE FOR FORMULATION A

FIGURE 10: YIELD STRESS AS A FUNCTION OF TEMPERATURE FOR FORMULATION B

FIGURE 11: YIELD STRESS AS A FUNCTION OF REDUCED RATE

FIGURE 12: YIELD STRESS AS A FUNCTION OF TEMPERATURE FOR FORMULATION F

**Fig.13**

**Fig.14**

**Fig.15**